(19) Europäisches Patentamt
European Patent Office
Office européen des brevets

(11) EP 3 454 497 B1

(12) **EUROPEAN PATENT SPECIFICATION**

(45) Date of publication and mention of the grant of the patent:
**05.05.2021 Bulletin 2021/18**

(51) Int Cl.:
***H04L 5/00*** *(2006.01)*

(21) Application number: **18193541.2**

(22) Date of filing: **10.09.2018**

(54) **NEW RADIO (NR) PHYSICAL RESOURCE BLOCK GRID STRUCTURE**

NR-RESSOURCENBLOCK-GITTERSTRUKTUR

STRUCTURE DE GRILLE DE BLOC DE RESSOURCES PHYSIQUES DE NOUVELLE RADIO (NR)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.09.2017 US 201762557010 P**
**17.11.2017 US 201762588120 P**

(43) Date of publication of application:
**13.03.2019 Bulletin 2019/11**

(73) Proprietor: **Apple Inc.**
**Cupertino, CA 95014 (US)**

(72) Inventors:
- **KHORYAEV, Alexey**
  **603105 Nizhny Novgorod (RU)**
- **CHERVYAKOV, Andrey**
  **603006 Nizhny Novgorod (RU)**
- **PANTELEEV, Sergey**
  **603065 Nizhny Novgorod (RU)**
- **BELOV, Dmitry**
  **603148 NIZ (RU)**
- **JEON, Jeongho**
  **San Jose, CA 95120 (US)**

(74) Representative: **Lang, Johannes**
**Bardehle Pagenberg Partnerschaft mbB**
**Patentanwälte, Rechtsanwälte**
**Prinzregentenplatz 7**
**81675 München (DE)**

(56) References cited:
- **QUALCOMM INCORPORATED: "NR transmission bandwidth configuration for MPR evaluation", 3GPP DRAFT; R4-1708606, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG4, no. Berlin, DE; 20170821 - 20170825 20 August 2017 (2017-08-20), XP051321709, Retrieved from the Internet: URL:http://www.3gpp.org/ftp/Meetings_3GPP_SYNC/RAN4/Docs/ [retrieved on 2017-08-20]**
- **PANASONIC: "Discussion on PRB grid and PRB indexing", 3GPP DRAFT; R1-1710943, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Qingdao, P.R. China; 20170627 - 20170630 26 June 2017 (2017-06-26), XP051300144, Retrieved from the Internet: URL:http://www.3gpp.org/ftp/Meetings_3GPP_SYNC/RAN1/Docs/ [retrieved on 2017-06-26]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 454 497 B1

## Description

BACKGROUND

Various embodiments generally may relate to the field of wireless communications.

Long-Term Evolution is a fourth generation, "4G" wireless communication system for mobile devices standardized by the 3rd Generation Partnership Group (3GPP). LTE uses a particular "numerology", which is mainly characterized by the subcarrier spacing. In particular, LTE uses a 15kHz subcarrier spacing. Larger subcarrier spacings reduce the impact of frequency errors and phase noise due to shorter OFDM symbol duration. However for a given cyclic prefix length, the overhead increases the larger the subcarrier spacing. The given LTE numerology provides a good compromise between reducing an overhead associated with the cyclic prefix yet providing adequate sensitivity to Doppler spread or shift and phase noise for typical LTE deployment scenarios of outdoor cellular deployments of up to 3GHz.

However, 5th Generation wireless communication systems, sometimes denoted "New Radio" (NR) are designed to support a wider range of deployment scenarios ranging from mmwave (e.g. above 24.2 GHz) small cell deployments to large cells with sub-1Ghz carrier frequencies. NR can be deployed in different frequency bands. For example, a frequency range 1 (FR1) including all LTE and new bands below 6 GHz (e.g. 450MHz to 6GHz) and a frequency range 2 (FR2) including new bands in the range 24.2 to 52.6 GHz (mmWave). In addition, further extension of NR technology to other frequency ranges is anticipated in the future. For this reason, NR supports a flexible numerology with a range of subcarrier spacings but having a baseline 15kHz subcarrier spacing for coexistence with LTE in FR1. For the lower range of carrier frequencies from sub 1GHz up to a few GHz (FR1), cell sizes can be relatively large so a cyclic prefix of a couple of microseconds is appropriate to handle the expected delay spread, which means that a subcarrier spacing of 15-60kHz is appropriate. However, for higher carrier frequencies approaching the mmWave range (FR2), phase noise becomes more significant, which calls for higher subcarrier spacings such as 60-120kHz.

The NR and LTE systems may operate in different frequency channels (RF carriers). In particular, different frequency resources may be used by different operators or by one operator in case of carrier aggregation operation. The base stations (e.g. gNBs) and UEs are assigned to

operate within an assigned RF channel bandwidth (component carrier in carrier aggregation). In order to ensure that operation in one carrier has no or limited impact in the system adjacent channels (component carriers) the NR and LTE systems introduce dedicated guard bands on the edges of the channel bandwidth to avoid excessive out of band emission and avoid negative impact on the operation in the adjacent frequency channels. In particular, both systems allow useful signal transmission within a sub-part of the available resources (e.g. useful signal transmission may occupy X% of resources within the assigned channel bandwidth) and the remaining frequency resources are used as dedicated guard bands on the edges of the channel bandwidth. In LTE systems the useful signal transmission may occupy 90% of available resources (i.e. 90% spectrum utilization) while the remaining 10% of resources on the channel bandwidth edges are used as guard bands. For NR systems the spectrum utilization depends on the used numerology (subcarrier spacing), channel bandwidth and frequency range. For most cases the achievable spectrum utilization may exceed 90%.

Since NR supports a plurality of different numerologies on the same carrier, scheduling is considerably less straightforward that for LTE, which has a single subcarrier spacing.

QUALCOMM INCORPORATED: "NR transmission bandwidth configuration for MPR evaluation", 3GPP DRAFT; R4-1708606, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. RAN WG4, no. Berlin, DE; 20170821 - 20170825, 20 August 2017 (2017-08020), XP051321709, retrieved from the Internet: URL:http://www.3epp.ors/ftp/Meetines_3GPP_SYNC/RAN4/Docs/ describes New Radio (NR) transmission bandwidth configuration for maximum power reduction (MPR) evaluation.

PANASONIC: "Discussion on PRB grid and PRB indexing", 3GPP DRAFT; Rl-1710943, 3RD GENERATION PARTNERSHIP PROJECT (3GPP), MOBILE COMPETENCE ENTRE; 650, ROUTE DES LUCIOLES; F-06921 SOPHIA-ANTIPOLIS CEDEX; FRANCE, vol. RAN WG1, no. Qingdao, P.R. China; 20170627 - 20170630, 26 June 2017 (2017-06-26), XP051300144, Retrieved from the internet: URL:http://www.3epp.ors/ftp/Meetines_3GPP_SYNC/RAN1/Docs/ describes physical resource block (PRB) grid determination and PRB indexing aspects in relation to New Radio (NR).

BRIEF DESCRIPTION OF THE DRAWINGS

Embodiments described herein are illustrated by way of example, and not by way of limitation, in the Figures of the accompanying drawings in which like reference numerals refer to similar elements:

Figure 1 schematically illustrates a resource block grid structure comprising a plurality of resource blocks that are contiguous in frequency and centred within a given channel bandwidth;

Figure 2 schematically illustrates a nested NR grid structure in which a plurality of different supported subcarrier spacings have resource block boundaries that are aligned on a frequency axis;

Figure 3 schematically illustrates example resource block grids for two different subcarrier spacings, in which resource block boundary alignment between two different subcarriers results in guard band asymmetry with a smaller than ideal guard band on one band edge;

Figure 4 schematically illustrates and example resource block grid structure for 15kHz, 30kHz and 60 kHz subcarrier spacings in which the grids for each of the three subcarrier spacings are left-aligned and only the 15khz sub-carrier spacing is arranged symmetrically about a centre frequency of the channel bandwidth;

Figure 5 schematically illustrates an example resource block grid structure for 15kHz, 30kHz and 60 kHz subcarrier spacings similar to the Figure 4 example, but in which for each of the three resource grids, only a subset of the resource blocks are selected to be active resource blocks for use as transmission and/or reception bandwidth and the remaining resource blocks are virtual resource blocks used for indexing;

Figure 6 schematically illustrates an example of resource block allocation for a 5 MHz bandwidth, in which the resource block grids for 15kHz and 30kHz subcarrier spacings are left-aligned in frequency, a subset of the resource blocks of the 30kHz resource block grid are active resource blocks and the remaining subset are virtual resource blocks and showing outcomes of three different options for determining a number of active resource blocks (spectrum utilization) for each subcarrier spacing;

Figure 7 schematically illustrates an example of resource block allocation for a 10 MHz bandwidth including spectrum utilization for three different maximum resource block number determining options;

Figure 8 schematically illustrates an example of resource block allocation for a 15 MHz bandwidth including spectrum utilization for three different maximum resource block number determining options;

Figure 9 schematically illustrates an example of resource block allocation for a 20 MHz bandwidth including spectrum utilization for three different maximum resource block number determining options;

Figure 10 is a flow chart schematically illustrating a method of determining a resource block grid structure to provide both nesting of different subcarrier spacings and to preserve at least a minimum guard band for each subcarrier spacing, frequency range and channel bandwidth;

Figure 11 schematically illustrates Table 1 that specifies spectral utilization in the form of a maximum number of resource blocks for FR1 (below 6GHz) for different carrier bandwidths and

Table 2 that specifies spectral utilization in the form of a maximum number of resource blocks for above 6GHz (mmWave) for different carrier bandwidths;

Figure 12 schematically illustrates Table 3 that specifies a maximum number of resource blocks for a sub 6 GHz frequency range for three different subcarrier spaces and for a range of different channel bandwidths as calculated using three different options for calculating the maximum number;

Figure 13 schematically illustrates Table 4 that specifies a maximum number of resource blocks for a mmWave (above 6 GHz) frequency range for three different subcarrier spaces and for a range of different channel bandwidths as calculated using three different options for calculating the maximum number;

Figure 14 schematically illustrates Table 5 that specifies a number of active resource blocks (i.e. spectrum utilization rather than simply total number of resource blocks) for a sub 6 GHz frequency range for three different subcarrier spaces and for a range of different channel bandwidths as calculated using the three different options for calculating the maximum number;

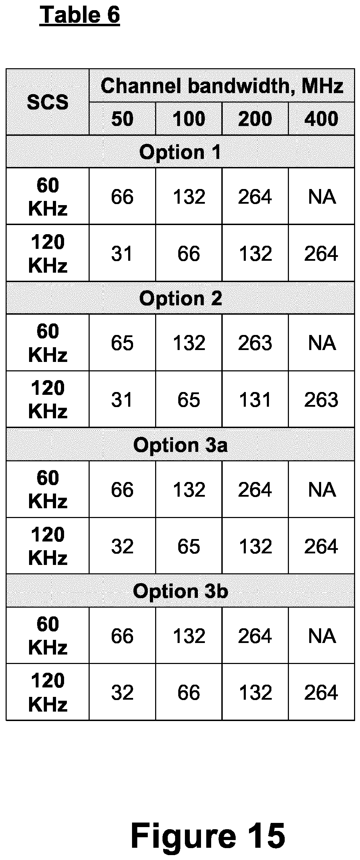

Figure 15 schematically illustrates Table 6 that specifies a number of active resource blocks (i.e. physical resource blocks) for a mmWave (above 6 GHz) frequency range for three different subcarrier spaces and for a range of different channel bandwidths as calculated using three different options for calculating the maximum number

Figure 16 schematically illustrates Table 7 that specifies for a sub-6GHz frequency range indices of start and end active resource blocks where the indexing is done separately for each numerology starting at the band edge and including virtual resource blocks;

Figure 17 schematically illustrates Table 8 that specifies for a mmWave frequency range, indices of start and end active resource blocks where the indexing is done separately for each numerology starting at the band edge and including virtual resource blocks;

Figure 18 schematically illustrates an architecture of a network system in accordance with some embodiments;

Figure 19 schematically illustrates a further architecture of a network system in accordance with some embodiments;

Figure 20 schematically illustrates example components of a wireless communication device in accordance with some embodiments;

Figure 21 schematically illustrates example interfaces of baseband circuitry in accordance with some embodiments;

Figure 22 schematically illustrates a control plane protocol stack in accordance with some embodiments;

Figure 23 schematically illustrates a user plane protocol stack in accordance with some embodiments;

Figure 24 schematically illustrates components of a core network in accordance with some embodiments; and

Figure 25 schematically illustrates processing hardware operable to execute machine-readable instructions to generate or to utilize for transmission or reception, the resource block grid structure according to some embodiments.

DETAILED DESCRIPTION

The matter for which protection is sought in terms of the technical features of the invention is defined by the appended claims.

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail. For the purposes of the present document, the phrase "A or B" means (A), (B), or (A and B).

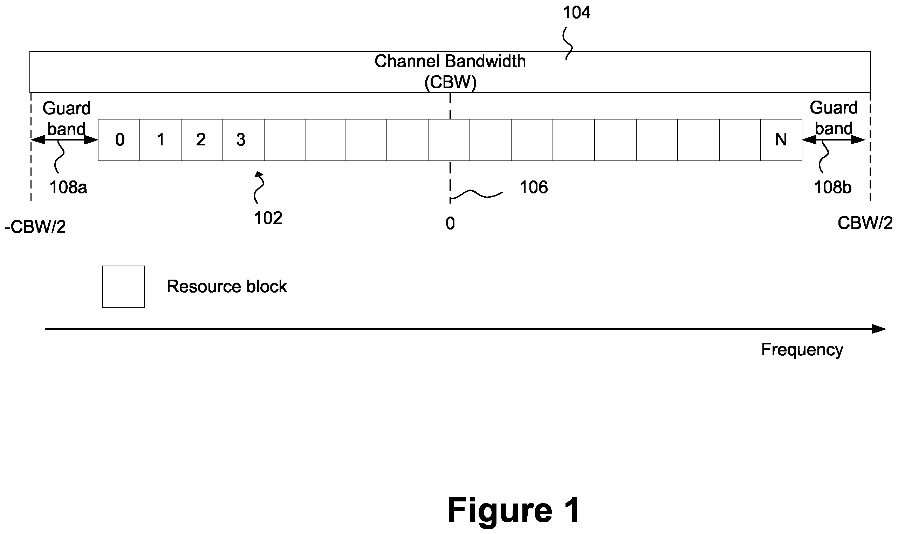

Embodiments herein relate to the structure of the new radio (NR) physical resource block/ resource block (PRB / RB) grid. According to the legacy NR design assumptions the resource block (RB) is defined as a non-zero integer number $N_{SC}^{RB}$ of consecutive (contiguous) subcarriers within a given numerology (i.e. subcarrier spacing - SCS) in the frequency domain. Note that an NR resource block differs from an LTE resource block. In particular, an NR resource block is a one-dimensional measure spanning the frequency domain only, whereas LTE uses two-dimensional resource blocks of 12 carriers in the frequency domain and one slot in the time domain. The one-dimensional resource block definition on NR provides the flexibility for transmission to occupy less than a complete time slot. Multiple NR physical resource blocks will occupy adjacent resources (i.e. are contiguously arranged as shown in Figure 1) in frequency domain inside of an assigned channel bandwidth (CBW, e.g. 10 MHz) in a way to form the RB grid structure which can be used for further resource allocation for signal transmission or reception. An example RB grid 102 for a given SCS relative to a Channel Bandwidth 104 is shown in Figure 1. In the Figure 1 example, the RB grid is symmetrically arranged about the carrier centre frequency 106. Figure 1 also shows a first guard band 108a at a left-hand (i.e. lowest CBW frequency) band edge and a second guard band 108b at a right-hand (i.e. highest CBW frequency) band edge. In the Figure 1 example, the resource grid 102 is arranged to have a maximum number of individual RBs within the CBW 104, which ensures that there is at least a minimum guard band 108a, 109a at each band edge. This means that best use is made of available resources for transmission and reception but still protects against potential interference to and from the adjacent frequency channels.

The first release of LTE was designed on an assumption that a maximum carrier bandwidth would be 20MHz. In LTE, wireless devices typically see the full CBW and a resource block is symmetrical with respect to the carrier centre frequency. However, NR is designed to support relatively wide bandwidths of up to 400 MHz for a single carrier. Hence in some examples an NR wireless device may see only part of a CBW and the part of the carrier received by the device may not be centred around the carrier frequency. This gives more flexibility in how resource block grids for respective SCSs can be arranged, but the additional flexibility can potentially make scheduling more complex.

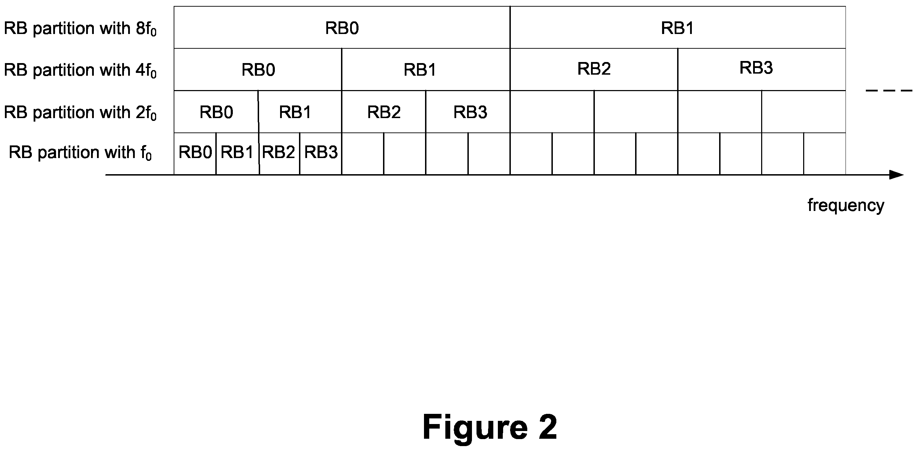

In addition, in accordance to 3GPP agreements the NR physical layer design should strive to have RB alignment among different supported numerologies and assumes a nested structure of RBs with different numerologies (e.g. 1 PRB of 60 kHz includes 2 PRBs of 30 kHz and 4 PRBs of 15 kHz SCS) as shown in Figure 2. In particular, the following 3GPP RAN1 WG agreements on the subcarrier and RB alignment structure were made:

- *In one carrier when multiple numerologies are time domain multiplexed (TDD),*
    - *RBs for different numerologies are located on a fixed grid relative to each other*
    - *For subcarrier spacing of $2^n$ * 15kHz, the RB grids are defined* as *the subset/superset of the RB grid for subcarrier spacing of 15kHz in a nested manner in the frequency domain*
    - *Note that of the numbering of individual resource blocks the Figure 1 is just an example*

Meantime, at the stage of NR standards development known when the present technique was devised, the NR RB grid structure design was not ye completed and there were several open issues which needed to be resolved:

1) Definition of the maximum number of RBs for each supported combination of channel bandwidth (CBW) and subcarrier spacing (SCS)

2) Definition of the RBs which can be used for signal transmission

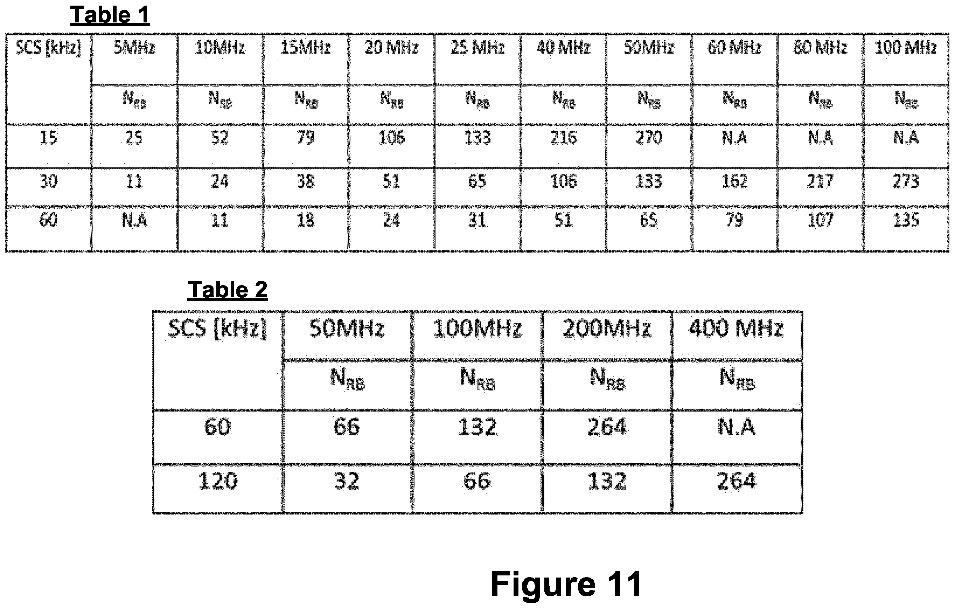

The related questions are tightly coupled with the definition of the NR spectrum utilization (SU) which was analyzed in the 3GPP RAN4 WG. In particular, the RAN4 reached the agreements as shown in Table 1 in Figure 11 on the maximum number of possible RBs to be used for different CBW/SCS combinations (as specified by the 3GPP document entitled "Way forward on spectrum utilization" first uploaded on 25th August 2017 having reference number R4-1709075 and presented at 3GPP TSG-RAN WG4 #84 Berlin, Germany, 21st-25th August 2017) taking into account practical UE implementations complying with target Radio Frequency (RF) out of band emission (OOBE), transmit signal quality and receiver selectivity requirements:

- *The Table 1 (Figure 11) RB values, which apply to FR1 (below 6GHz) are agreed based on the assumption of a symmetric guard band.*
  - *The RB values in the table are only meant to indicate the minimum guard band achievable for a given SCS and channel BW. The actual maximum RB allocation can be equal to or 1 RB less than the values shown in Table 1 in Figure 11.*
- *The Table 2 RB values for FR2 (mmWave) are agreed based on the assumption of symmetric guard band. If an asymmetric guard-band is agreed, potential 1 RB reduced may be considered.*
  - *The RB values in the table are only meant to indicate the minimum guard band achievable for a given SCS and channel BW. The actual maximum RB allocation can be equal to or 1 RB less than the values shown in the table.*

The RB values in the tables above were defined under assumption of symmetric guard bands. The guard bands are introduced to ensure that the NR operation in the given channel has minimum impact to/from operation in the adjacent frequency channel in terms of both receiver and transmitter characteristics. For example, the guard bands may ensure that the level of out of band emission (OOBE) is small enough and complies with target requirements including the spectrum emission mask (SEM) and adjacent channel leakage ratio (ACLR). In the case of guard bands being too small the useful signals may not decay enough and may thus cause excessive OOBE levels. In the case of guard bands being too large the overall system spectrum utilization may reduce and the system throughput may reduce.

A minimum guard band depends on a number of different factors, but the minimum guard band may depend on both the CBW and the SCS and generally increases as the SCS increases for a given CBW.

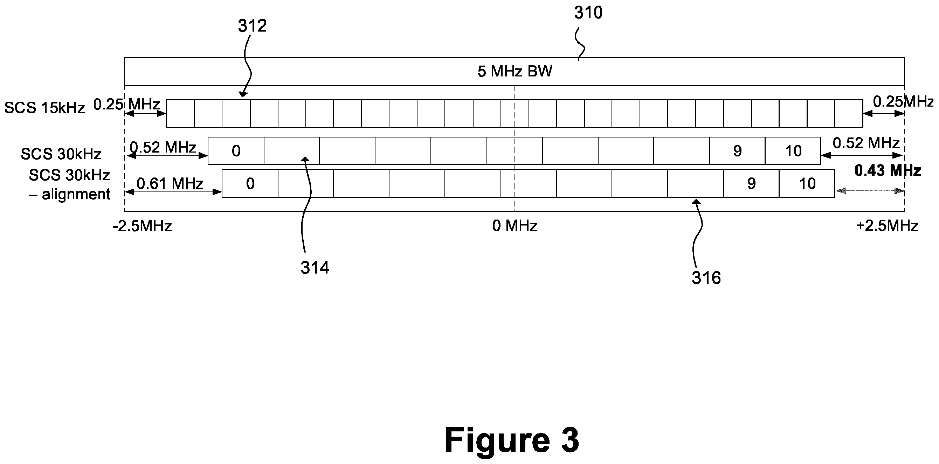

In Table 1 and Table 2 in Figure 11, the spectrum utilization values were derived for each numerology (SCS) independently and although guard periods were taken into account, the analysis did not take into account possible constraints on the RB grid structure. In particular, according to the present technique, it has been recognized that the RB alignment principles among different numerologies as illustrated in the nested numerology structure of Figure 2 may have impact on the guard band asymmetry. To make most efficient use of an available channel bandwidth guard bands for different SCSs may be taken into account. However, for ease of scheduling and to promote easy switching between one SCS and another SCS by a wireless device within the same CBW it is desirable to align resource blocks for different numerologies (and hence different SCSs) on their respective RB boundaries. The Table 1 and Table 2 values for the maximum number of resource blocks per SCS and per CBW for a given frequency range do not allow for nested alignment of RB boundaries for different SCSs. Figure 3 shows an example of 5 MHz CBW 310, and a 15 kHz SCS resource block allocation 312. Figure 3 also shows a first example 30kHz resource block allocation 314 in which the resource grid 314 is arranged symmetrically with respect to a centre of the CBW (corresponding to "0MHz" in Figure 3) and in which resource block boundaries are not aligned with the 15 kHz resource grid 312. Figure 3 also shows a second example 30kHz resource block allocation 316, in which the 30k Hz resource block boundaries are aligned with the 15kHz resource block boundaries. It may be observed, that once SC/RB alignment is applied in the resource grid 316, one of the guard bands becomes smaller comparing to the "symmetric" guard band of 0.52 MHz of resource grid 314. In particular, the right-hand guard band of resource grid 316 reduces to 0.43MHz whereas the left-hand guard band increases to 0.61 MHz. The related reduction shown at the right-hand band edge in Figure 3 can have negative impact on at least one of Spectrum Emission Mask (SEM) and Adjacent Channel Leakage Ratio (ACLR) and should be avoided. Hence, the RB grid structure may have impact on the achievable spectrum utilization and should be selected carefully.

Note that asymmetric guard bands may be desirable, for example, in a case where multiple numerologies are multiplexed in the same symbol. In this case a minimum guard band on each band edge of the CBW may be the minimum CBW appropriate for the numerology received immediately adjacent to the guard band.

Embodiments herein relate to methods to define the NR RB resource grid structure for different combinations of channel bandwidth and numerology (subcarrier spacing).

- Methods to define the maximum number of RBs may include:
  - Option 1: The maximum number of RBs in a CBW for the SCS is defined based on agreed spectrum utilization for the minimum SCS, such as the agreement specified by Table 1 and Table 2 shown in Figure 11
  - Option 2: The maximum number of RBs in a CBW is equal to the mathematical maximum number of RBs for the given CBW
  - Option 3: The maximum number of RBs in a CBW is selected to ensure nested resource allocation for different numerologies (multiple of 4 or 2)

- Introduce a concept of virtual RBs (now denoted Common Resource Blocks) which are used for PRB indexing purposes only and not used for signal resource allocation. Thus RBs may be indexed using virtual RBs to provide resource grids for each SCS that model, for example, a transmitted signal as seen by a UE for a given SCS. However, the receiving device needs to know where in the CBW the physical resource blocks containing transmitted data are located. In LTE, this is simple where there is a single numerology (15kHz) and all UEs support the full CBW. However in NR, the wider CBWs and the multiple numerologies in a given CBW make identifying the transmitted signal more complex. Thus introducing the concept of active RBs (essentially PRBs) and virtual RBs means that the start of the active RBs within the CBW can be used by a device to identify where PRBs of a transmission (or reception) can be found. The virtual RBs may be within the CBW but not part of the transmission or reception bandwidth. Thus the virtual RBs may be used to accommodate a minimum guard band for a given SCS and CBW.

Embodiments herein may consider the following approach to define the RB grid structure for each channel bandwidth (CBW):

1) Define the maximum number of RBs per each SCS ($N_{MAX}$, scs)

a. Option 1: The maximum number of RBs in a CBW for the SCS is defined based on agreed spectrum utilization (R4-1709075) for the minimum SCS among the ones supported for the given CBW.

b. Option 2: The maximum number of RBs in a CBW is equal to the mathematical maximum number of RBs for the given CBW (e.g. number of available RBs in CBW)

$$N_{Max,SCS} = floor\ (\frac{BW}{SCS*12}).$$

c. Option 3

i. Option 3a: The maximum number of RBs in a CBW for the minimum supported SCS per CBW is selected as *floor* $(\frac{BW}{SCS*12*2})*2$ (multiple of 2)

ii. Option 3b: The maximum number of RBs in a CBW for the minimum supported SCS per CBW is selected as *floor* $(\frac{BW}{SCS*12*4})*4$ (multiple of 4). Such method allows to ensure nested resource allocation for different numerologies.

d. Various options can be used jointly to find an optimal or best available value of maximum number of RBs per CBW.

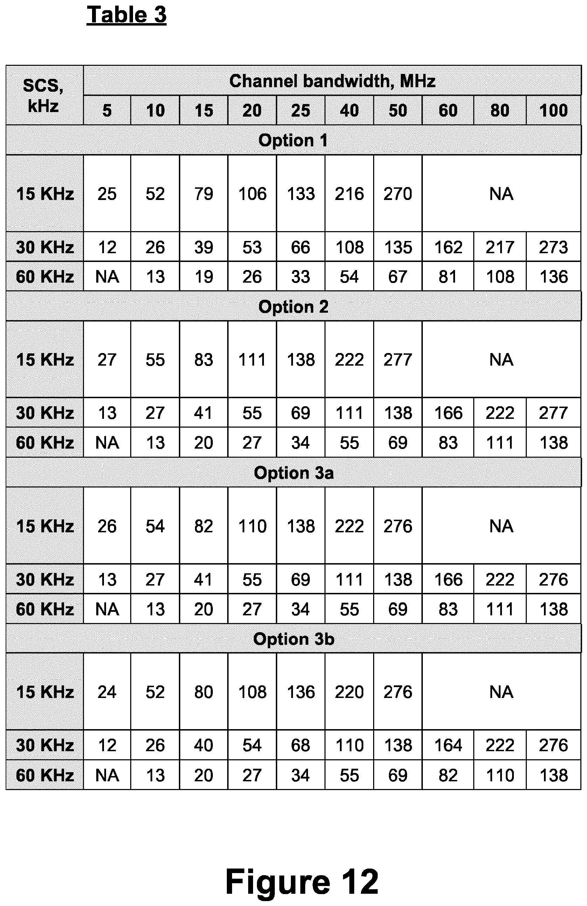

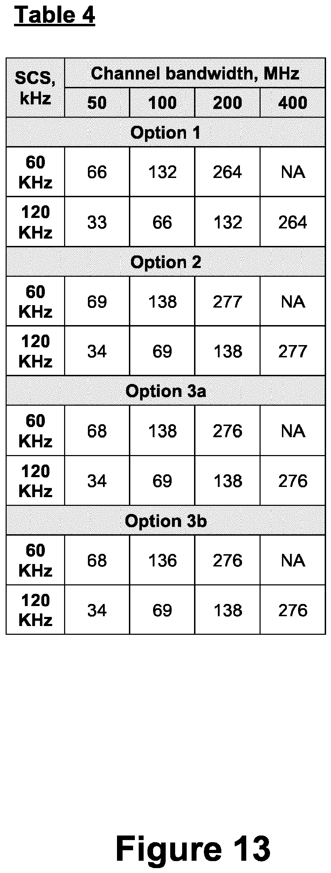

e. The maximum number of RBs per each SCS for different CBW is show in Table 3 in Figure 12 and in Table 4 in Figure 13. Table 3 is for an FR of sub 6 GHz whereas Table 4 is for mmWave

2) Use the following rules to apply mapping of RBs in the given CBW

a. The RBs for the minimum SCS (e.g. 15 kHz) for the given CBW are placed in symmetric way relative to center of carrier frequency

i. Note: Minimum SCS supported for CBW:

1. 15 kHz for FR1 and CBW = 5, 10, 15, 20, 25, 40, 50 MHz
2. 30 kHz for FR2 and CBW = 60, 80, 100 MHz
3. 60 kHz for FR2 and CBW = 50, 100, 200 MHz
4. 120 kHz for FR2 and CBW = 400 MHz

b. The RBs for other SCS (e.g. 30, 60, 120 kHz) for the given CBW are placed taking into account RB alignment procedure with nested structure starting from one of the sides of the CBW (left/right)

c. The RBs for different numerologies are located on a fixed grid relative to each other

d. The RB grids are defined as the subset/superset of the RB grid for the minimum subcarrier spacing in a nested manner in the frequency domain

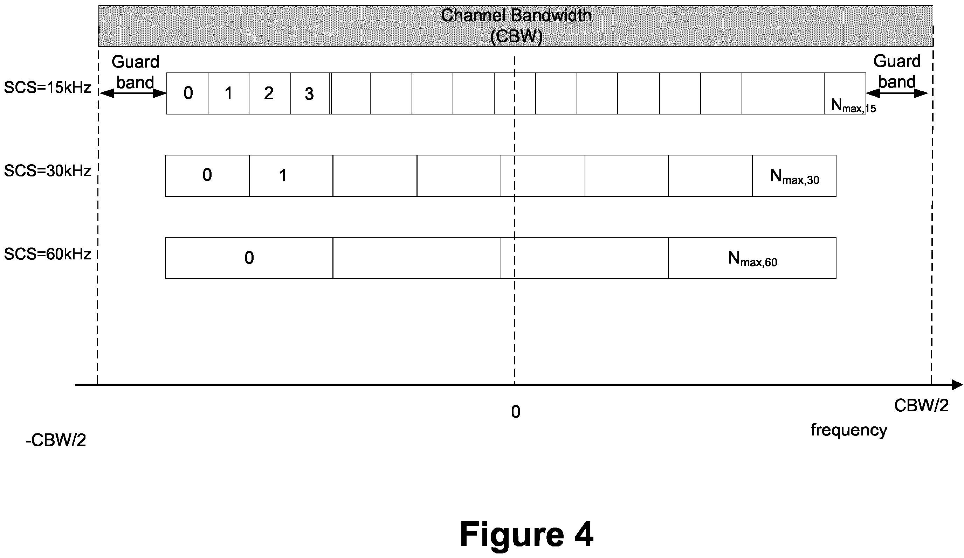

e. Figure 4 depicts an example of grid structure for the case of 15, 30 and 60 kHz SCS

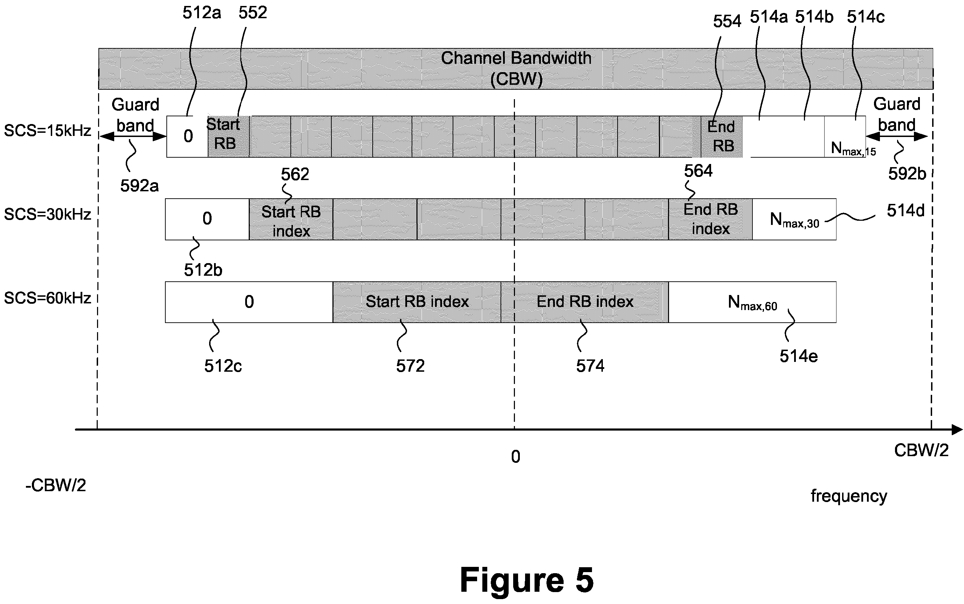

According to the invention, the RB grid structure of Figure 5 includes two types of RBs

a. "Virtual" RBs 512a to 512c and 514a to 514e

i. Used to facilitate RB alignment between different numerologies, RB indexing

ii. Located at band edges

iii. Not generally used for signal transmission and not assumed to be used for signal transmission/reception at least at the UE side

iv. NR BS may potentially use these RBs for transmission in case it is allowed to "not comply" with the SEM, ACLR requirements under certain network deployments. In other cases, BS should not use these RBs for transmission/reception.

b. "Active" RBs shaded grey in Figure 5

i. Regular RB (Physical Resource Blocks) used for signal transmission/reception at the BS and UE sides.
ii. Located in the center of the spectrum
iii. Positions of the RBs are chosen depending on the RB grid

c. Figure 5 illustrates the "Virtual"/"Active" RB principles

In Figure 5 for the SCS=15kHz the first active RB is a start RB 552 and the last active RB of a group of contiguous active RBs is an end RB 554. Similarly for the SCS=30kHz the first active RB is a start RB 562 and the last active RB of a group of contiguous active RBs is an end RB 564. For the SCS=60kHz the first active RB is a start RB 572 and the end RB 574 is the directly adjacent RB. As shown in Figure 5, although the virtual RBs 512a-c, and 514a-e have RB indices corresponding, for example to 0 and $N_{max,15}$, they are not generally used for signal transmission or reception. The active RBs such as the start RB 552 of the SCS=15kHz has a non-zero index because it is indexed relative to the virtual RB 512a at the left-hand band edge of the CBW.

In Figure 5 a left-hand guard band 592a and a right-hand guard band 592b may comply with a minimum guard band for the smallest supported SCS of 15kHz. Note that the SCS=30 KHz RB grid and the SCS=60kHz RB grid are left-aligned with the virtual RB 512a of the SCS=15kHz resource grid. In other embodiments RB grids for different subcarriers may be right-aligned or aligned at any RB boundary. However, even if the guard bands 592a, 592b satisfy a minimum guard band requirement of SCS=15kHz, they are unlikely to satisfy the comparatively larger minimum guard bands of SCS= 30kHz and SCS=60kHz. However, the virtual RBs 512b and 514d for SCS=30kHz and the virtual RBs 512c and 512e for SCS=60kHz can be used to perform the same function as a conventional guard band.

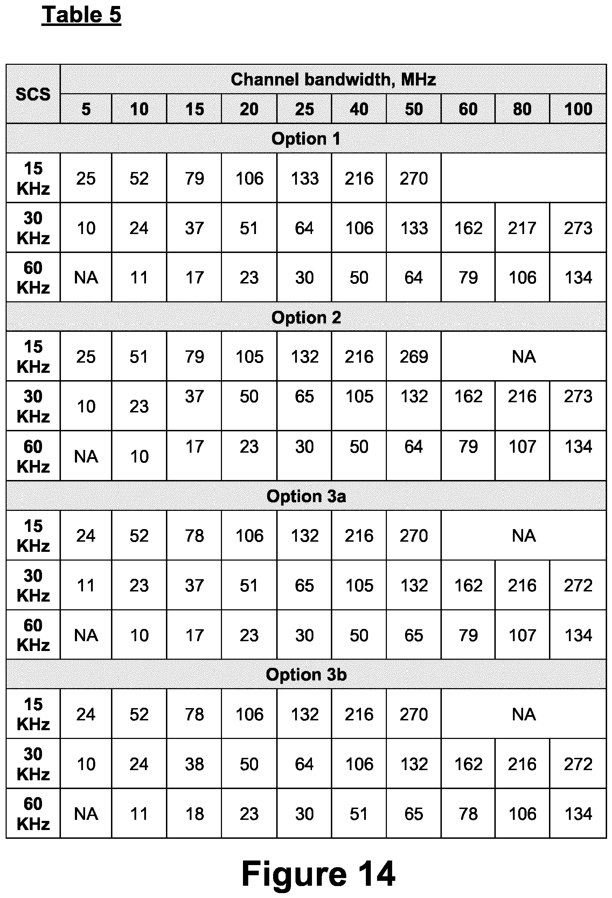

Table 5 in Figure 14 and Table 6 in Figure 14 show the number of "active" RBs (i.e. spectrum utilization) which can be used for each of the options (Option 1, Option 2 and Option 3a and Option 3b) described above for calculation of the maximum number of RBs in the CBW for the given SCS. This is in contrast with Table 3 and Table 4, which specify a maximum total number of resource blocks, without discriminating between active and virtual RBs.

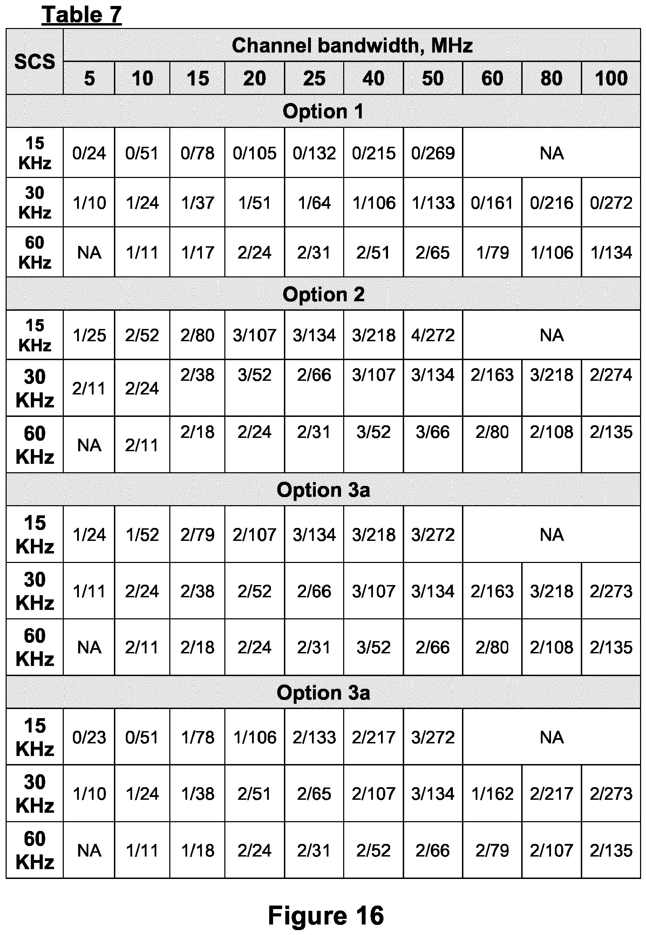

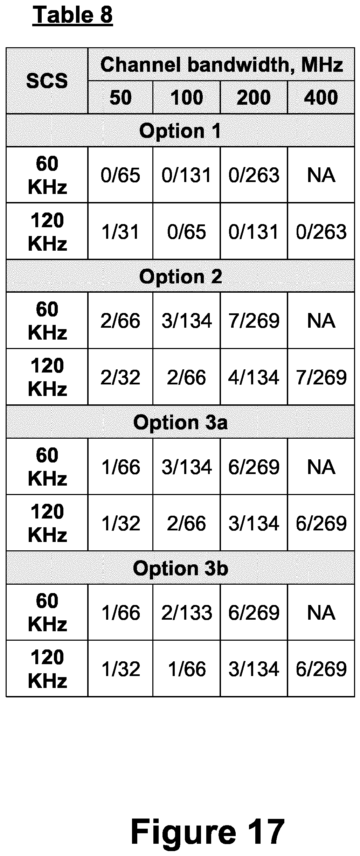

Table 7 in Figure 16 and Table 8 in Figure 17 show indexes of start/end "active" PRBs. The indexing is done for each numerology independently starting from the band edge. Table 7 shows an active PRBs range (FR = sub-6GHz) providing an indication of Start PRB index / End PRB index. Table 8 shows active PRBs range (FR2=mmWave), again providing an indication of start PRB index / End PRB index.

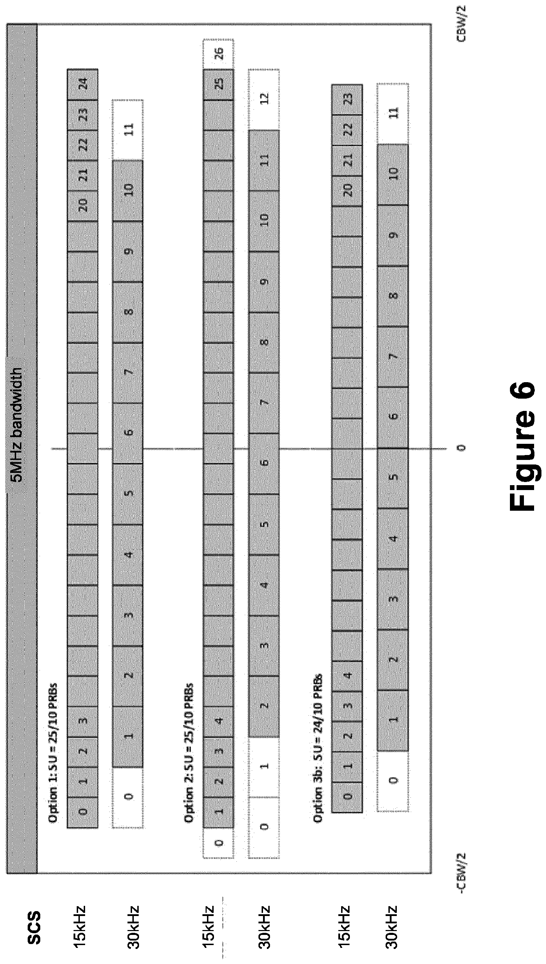

Figures 6-9 illustrate the examples of RB allocation for different RB grid structure options described previously. In Figures 6-9, the grey-shaded boxes indicate "active" RBs which can be used for signal allocation (i.e. characterize spectrum utilization), and "White" boxes correspond to the "virtual" RBs which are used for the RB indexing purposes and as the provision for spectrum utilization extension in the future releases. Virtual RBs are now denoted Common RBs by 3GPP.

Figure 6 schematically illustrates for a CBW of 5 MHz and for two supported subcarrier spacings of SCS=15kHz and SCS=30kHz, spectrum utilization calculated according to each of Option 1, Option 2 and Option 3b.

For Option 1 and SCS=15kHz, the 5MHz CBW of Figure 6 can accommodate a total of 25 RBs, all of which are active RBs. For Option 1 and SCS=30kHz the 5MHz CBW of Figure 6 can accommodate a total of 12 RBs, with RBs having indices 0 and 11, which are located on the two band edges, being virtual RBs and the remaining RBs having indices 1 through 10 inclusive, being active RBs.

For Option 2 and SCS=15kHz, the 5MHz CBW of Figure 6 can accommodate a total of 27 RBs, 25 of which are active RBs and two of which are virtual RBs. The virtual RBs are RBs 0 and 26, one on each band edge. For Option 2 and SCS=30kHz the 5MHz CBW of Figure 6 can accommodate a total of 13 RBs, with active RBs having indices 2 to 11 inclusive and where RBs having indices 0, 1 and 12 are virtual RBs. Thus, there are two virtual RBs on the lowest frequency band edge but only one virtual RB on the highest frequency band edge in this example, which is an asymmetrical arrangement of virtual RBs.

For Option 3b and SCS=15kHz, the 5MHz CBW of Figure 6 can accommodate a total of 24 RBs, all of which are active RBs. For Option 3b and SCS=30kHz, the 5MHz CBW of Figure 6 can accommodate a total of 12 RBs, including 10 active RBs having indices 1 to 10 inclusive and two virtual RBs, one on each band edge and thus having indices 0 and 11.

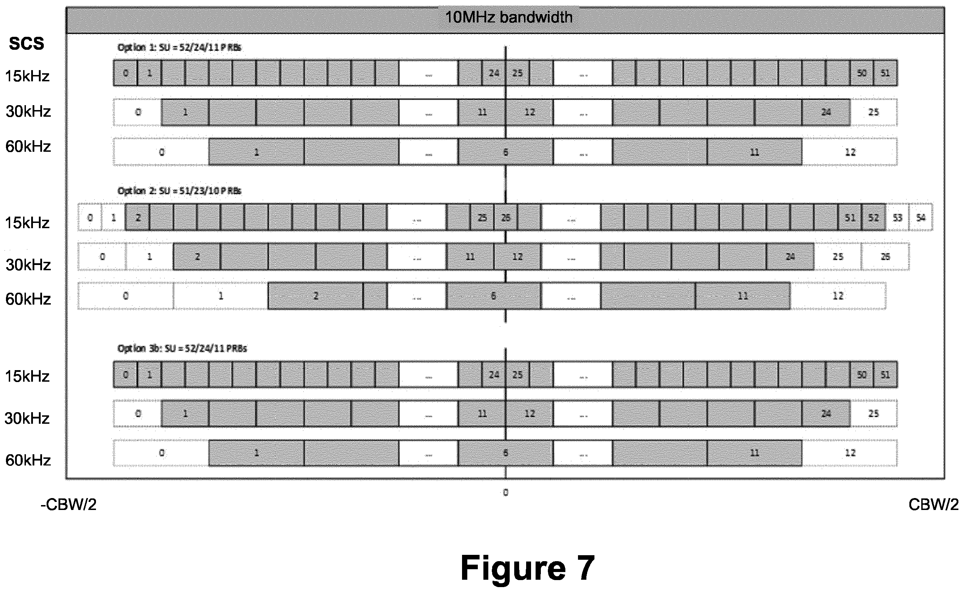

Figure 7 schematically illustrates for a CBW of 10 MHz and for three supported subcarrier spacings of SCS=15kHz, SCS=30kHz and SCS=60kHz, spectrum utilization calculated according to each of Option 1, Option 2 and Option 3b.

For Option 1 and SCS=15kHz, the 10MHz CBW of Figure 7 can accommodate 52 RBs, all of which are active RBs (i.e. physical RBs). For Option 1 and SCS=30kHz, the 10 MHz bandwidth can accommodate a total of 26 RBs, 24 of which are active RBs and 2 of which are virtual RBs. The active RBs correspond to indices 1 through 24 and the virtual RBs correspond to indices 0 and 25 on the band edges. For Option 1 and SCS=60kHz, the 10 MHz bandwidth can accommodate a total of 13 RBs, 11 of which are active RBs and 2 of which, one on each of the two band edges, are virtual RBs.

For Option 2 and SCS=15kHz, the 10MHz CBW of Figure 7 can accommodate 55 RBs in total, 51 of which are active RBs (i.e. physical RBs) and four of which are virtual RBs. The virtual RBs correspond to RB indices 0, 1, 53 and 54, which are two adjacent RBs on each band edge. For Option 2 and SCS=30kHz, the 10 MHz bandwidth can accommodate a total of 26 RBs, 23 of which are active RBs and 4 of which are virtual RBs. The active RBs correspond to indices 2 through 24 and the virtual corresponding to indices 0 and 1 on the left-hand band edge and indices 25 and 26 on the right-hand band edge. For Option 2 and SCS=60kHz the 10 MHz bandwidth can accommodate a total of 13 RBs, 10 of which are active RBs and three of which are virtual RBs. In this case, in contrast to the 15kHz and 30kHz SCSs, the arrangement of virtual RBs for SCS=60kHz is asymmetric with respect to the band edges because RB indices 0 and 1 and RB index 12 are the virtual RBs. Thus there are two virtual RBs on the low-frequency band edge but only one virtual RB on the high frequency band edge in this example. The RB indices 2 to 11 inclusive are active RBs for SCS=60kHz and 10 MHz BW for Option 2.

For Option 3b and SCS=15kHz, the 10MHz CBW of Figure 7 can accommodate 52 RBs in total, all of which are active RBs. For Option 3b and SCS=30kHz the 10MHz CBW of Figure 7 can accommodate 26 RBs in total, 24 of which are active RBs and two of which, on eon each band edge, are virtual RBs. For Option 3b and SCS=60kHz the 10MHz CBW of Figure 7 can accommodate a total of 13 RBs, with 11 active RBs and two virtual RBs, one on each band edge.

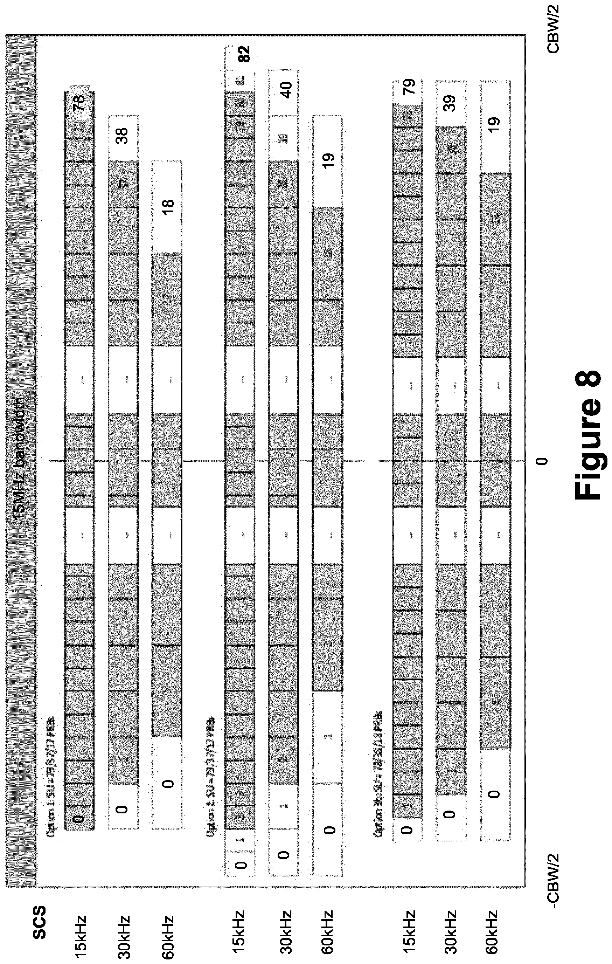

Figure 8 schematically illustrates for a CBW of 15 MHz and for three supported subcarrier spacings of SCS=15kHz, SCS=30kHz and SCS=60kHz, spectrum utilization calculated according to each of Option 1, Option 2 and Option 3b.

For Option 1 and SCS=15kHz, the 15MHz CBW of Figure 8 can accommodate 79 RBs, all of which are active RBs (i.e. physical RBs). For Option 1 and SCS=30kHz the 15 MHz bandwidth of Figure 8 can accommodate a total of 39 RBs, 37 of which are active RBs and 2 of which are virtual RBs, one on each band edge. The active RBs correspond to indices 1 through 37 and the virtual RBs correspond to indices 0 and 38. For Option 1 and SCS=60kHz the 15 MHz bandwidth can accommodate a total of 19 RBs, 17 of which are active RBs and 2 of which, one on each of the two band edges, are virtual RBs.

For Option 2 and SCS=15kHz, the 15MHz CBW of Figure 8 can accommodate 83 RBs in total, 79 of which are active RBs (i.e. physical RBs) and four of which are virtual RBs. The virtual RBs correspond to RB indices 0, 1, 81 and 82, which are two adjacent RBs on each band edge. For Option 2 and SCS=30kHz the 15 MHz bandwidth can accommodate a total of 41 RBs, 37 of which are active RBs and 4 of which are virtual RBs. The active RBs correspond to indices 2 through 38 and the virtual corresponding to indices 0 and 1 on the left-hand band edge and indices 39 and 40 on the right-hand band edge. For Option 2 and SCS=60kHz the 15 MHz bandwidth can accommodate a total of 20 RBs, 17 of which are active RBs and three of which are virtual RBs. In this case, in contrast to the 15kHz and 30kHz SCSs, the arrangement of virtual RBs for SCS=60kHz is asymmetric with respect to the band edges because RB indices 0 and 1 and RB index 19 are the virtual RBs. Thus, there are two virtual RBs on the low-frequency band edge but only one virtual RB on the high frequency band edge in this example. The RB indices 2 to 18 inclusive are active RBs for SCS=60kHz and 15 MHz BW for Option 2.

For Option 3b and SCS=15kHz, the 15MHz CBW of Figure 8 can accommodate 80 RBs in total, 78 of which are active RBs and two of which are virtual RBs (indices 0 and 79). For Option 3b and SCS=30kHz the 15MHz CBW of Figure 8 can accommodate 40 RBs in total, 38 of which are active RBs and two of which, one on each band edge, are virtual RBs. For Option 3b and SCS=60kHz, the 15MHz CBW of Figure 8 can accommodate a total of 20 RBs, with 18 active RBs and two virtual RBs, one on each band edge and thus corresponding to RB indices 0 and 19.

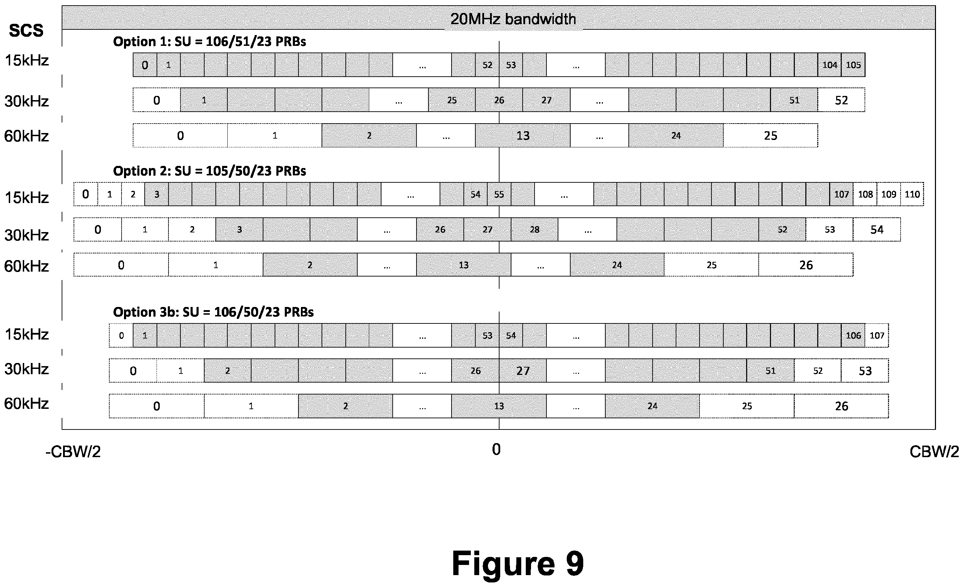

Figure 9 schematically illustrates for a CBW of 20 MHz and for three supported subcarrier spacings of SCS=15kHz, SCS=30kHz and SCS=60kHz, spectrum utilization calculated according to each of Option 1, Option 2 and Option 3b.

For Option 1 and SCS=15kHz, the 20MHz CBW of Figure 9 can accommodate 106 RBs, all of which are active RBs (i.e. physical RBs). For Option 1 and SCS=30kHz the 20 MHz bandwidth of Figure 9 can accommodate a total of 53 RBs, 51 of which are active RBs and 2 of which are virtual RBs, one on each band edge. The active RBs correspond to indices 1 through 51 and the virtual RBs correspond to indices 0 and 52. For Option 1 and SCS=60kHz the 20 MHz bandwidth can accommodate a total of 26 RBs, 23 of which are active RBs and 3 of which are virtual RBs, two virtual RBs on the lowest-frequency band edge and one virtual RB on the highest frequency band edge.

For Option 2 and SCS=15kHz, the 20MHz CBW of Figure 9 can accommodate 111 RBs in total, 105 of which are active RBs (i.e. physical RBs) and six of which are virtual RBs, three on each band edge. The virtual RBs correspond to RB indices 0, 1, 2 and 108, 109, 110. For Option 2 and SCS=30kHz the 20 MHz bandwidth can accommodate a total of 55 RBs, 50 of which are active RBs and 5 of which are virtual RBs. The active RBs correspond to indices 3 through 52 and the virtual corresponding to indices 0, 1 and 2 on the left-hand band edge and indices 53 and 54 on the right-hand band edge. For Option 2 and SCS=60kHz the 20 MHz bandwidth can accommodate a total of 27 RBs, 23 of which are active RBs and four of which are virtual RBs, corresponding to two adjacent virtual RBs on each band edge.

For Option 3b and SCS=15kHz, the 20 MHz CBW of Figure 9 can accommodate 108 RBs in total, 106 of which are active RBs and two of which are virtual RBs (indices 0 and 107). For Option 3b and SCS=30kHz the 20MHz CBW of Figure 9 can accommodate 54 RBs in total, 50 of which are active RBs and four virtual RBs, two on each band edge. For Option 3b and SCS=60kHz, the 20MHz CBW of Figure 9 can accommodate a total of 27 RBs, with 23 active RBs and four virtual RBs, two on each band edge and thus corresponding to RB indices 0, 1,25 and 26.

In the examples of Figures 6 to 9, no guard bands are shown. However, the virtual RBs can be used as guard bands and the number of virtual RBs may vary for different SCSs. Note that Option 1 uses a maximum number of RBs based on the agreed spectrum utilization for the minimum SCS as specified in the 3GPP document entitled "Way forward on spectrum utilization" first uploaded on 25th August 2017 having reference number R4-1709075. Thus Option 1 may take into account a minimum guard band for the 15kHz SCS in each case. However, the minimum guard band for SCS=30kHz and for SCS=60kHz may be larger. Thus, the virtual RBs at the band edges may be used to guarantee that the minimum guard band for the respective SCS is adhered to.

Option 2 leaves no room for guard bands for even the 15kHz SCS and thus to respect the minimum guard band for option 2 RB grids, virtual RBs on the band edges are provided within the CBW for each of the supported SCSs. Option 3b is similar to Option 2, but Option 3b ensures that the total number of resource blocks for the minimum supported SCS (in this case 15kHz) is a multiple of four.

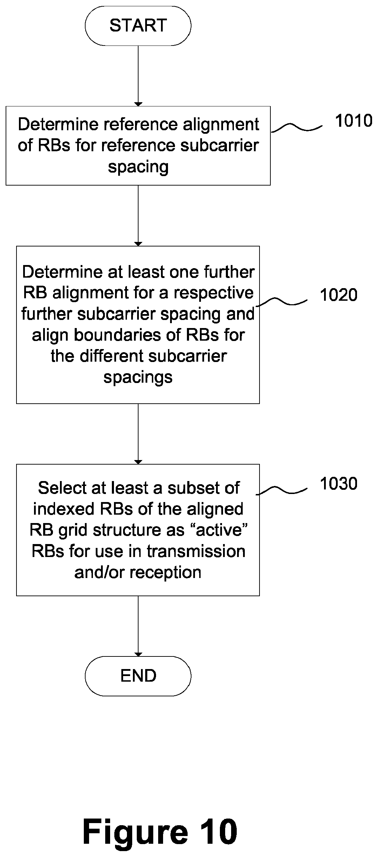

Figure 10 is a flow chart schematically illustrating a method of determining a resource block grid structure to provide both nesting of different subcarrier spacings and to preserve at least a minimum guard band for each subcarrier spacing, frequency range and channel bandwidth. At process element 1010 a reference alignment is determined within the channel bandwidth for the frequency range for a plurality of contiguous reference resource blocks corresponding to a reference subcarrier spacing. The reference alignment may be, for example, and alignment of contiguous RBs of a minimum supported SCS for the given frequency range and the given channel bandwidth.

Next, at process element 1020, at least one further alignment is determined within the given channel bandwidth for the given frequency range for a plurality of contiguous respective further resource blocks of a respective further sub-carrier spacing. The further alignment is arranged to align a boundary of a further resource block with a boundary of one of the reference resource blocks to provide a nested arrangement such as that illustrated in Figure 2. Thus, for example, one further alignment may involve aligning one or more boundaries of contiguous RBs of a resource grid of a 30kHz subcarrier with one or more RB boundaries for the 15kHz subcarrier spacing for the same CBW and FR. Yet a further alignment may involve aligning boundaries of RBs of a 60kHz subcarrier with one or more RB boundary of the 15kHz subcarrier, so that all three supported subcarriers align with each other in a nested way.

Next, at process element 1030 from resource blocks of the reference alignment and the at least one further alignment, at least a subset (i.e. a non-zero subset) of the reference resource blocks and the further resource blocks are selected as active resource blocks for use in at least one of uplink or downlink wireless communication. The selection of active resource blocks from the RBs indexed in each resource grid is to preserve at each end of the given channel bandwidth, at least a minimum guard band corresponding to the respective subcarrier spacing and the channel bandwidth and the frequency range. The non-selected RBs may be virtual RBs, which are excluded from use for transmission or reception, although they may perform the function of guard bands and may be used for indexing of RBs of a corresponding subcarrier resource grid.

## Additional Embodiments

In a 3GPP discussion several open issues on the PRB structure were identified in the 3GPP document R4-1711736 entitled "WF on NR spectrum utilization" from the TSG-RAN WG4 #84bis meeting in Dubrovnik, Croatia, 9-13 October 2017. Various embodiments herein provide solutions to resolve those the identified issues. One of the open issues is related to the Reference SCS to be used to derive the PRB grid structure. In the examples of Figures 4 to 9 described above, the reference SCS may be the minimum supported SCS for the given CBW and the given frequency range. In particular, the following generalized framework is considered based on the 3GPP discussions in the last meeting for the given CC CBW (Component Carrier Channel Bandwidth):
Reference SCS: PRBs for the reference SCS may be placed symmetrically relative to the middle of the channel BW.

- Number of PRBs for reference SCS is equal to N or N-1 (where N is the value in [R4-1709075 *"Way forward on spectrum utilization"* mentioned above])
- The PRB grid may or may not include additional PRBs on the band edges to simplify the PRB grid alignment. Number of PRBs in the grid is implementation dependent.
- Reference SCS is configurable and may be implementation dependent

- *Option 1: Minimum SCS in a channel BW (fixed value agnostic to actual set of SCS used by Network)*
- *Option 2: Reference SCS is based on Network scheduling*

- Non-Reference SCS: PRBs of non-reference SCS may be placed in the middle of the channel BW
  - The PRBs are placed in way to minimize, or at least reduce, the difference between the right/left guard bands (i.e. in the most symmetric way)
  - The PRBs should be placed in accordance to the PRB grid structure. PRB grid alignment assumptions between different numerologies are implementation dependent.
  - The number of PRBs may be derived in way in a way to avoid tightening the minimum guard band (GB) which corresponds to the SU in [R4-1709075] ($GB_{min}$(SCS,CBW))
    - Number of PRBs is equal to N or N-1 (where N is the value in [R4-1709075 *"Way forward on spectrum utilization"* mentioned above])
    - The PRB placement may satisfy the following conditions
    - $GB_{left} \geq GB_{min}(SCS,CBW) + GB_{Threshold}$
    - $GB_{right} \geq GB_{min}(SCS,CBW) + GB_{Threshold}$

  o $GB_{left}$ and $GB_{right}$ are the guard bands between the left/right CBW edge and the start of the first PRB / end of the last PRB.
  o If either left or right guard bands for the case of N PRBs is smaller than ($GB_{min}$(SCS,CBW) + $GB_{Threshold}$), then the number of PRBs shall be reduced by 1.

- $GB_{Threshold}$ is configurable and may be implementation dependent

In order to identify the PRB grid structure the assumptions on the reference SCS should be clarified. The following options are proposed:

- Use fixed Reference SCS.
- Option A: Reference SCS is the minimum SCS in a channel BW for the given frequency range (FR).
- Option B: Reference SCS is the 15 kHz for FR1 and 60 kHz for FR2.
- Option C: Reference SCS is minimum SCS for the FR.
- Option D: Reference SCS is the RMSI (remaining system information) SCS signaled in the Physical Broadcast Channel (PBCH).

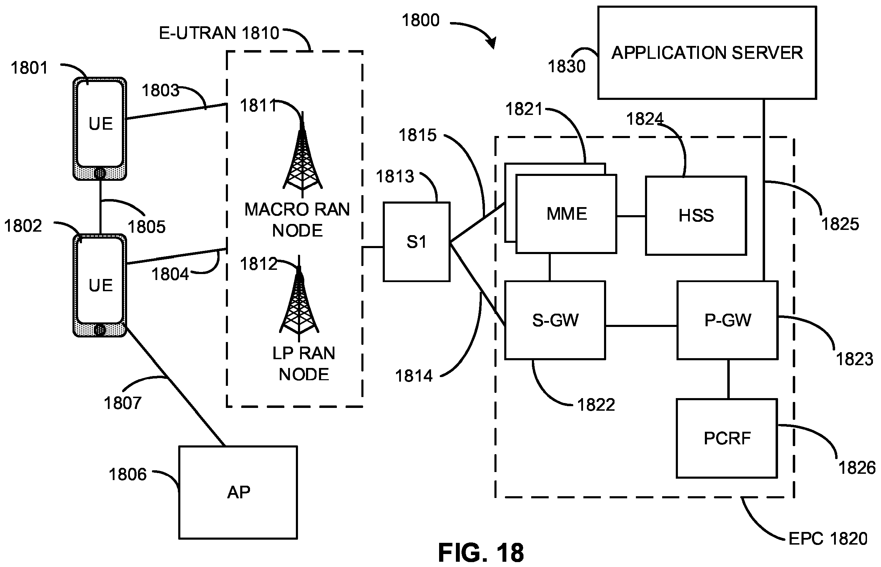

FIG. 18 illustrates an architecture of a system 1800 of a network in accordance with some embodiments. The system 1800 is shown to include a user equipment (UE) 1801 and a UE 1802.

The UEs 1801 and 1802 are illustrated as smartphones (e.g., handheld touchscreen mobile computing devices connectable to one or more cellular networks),but may also comprise any mobile or non-mobile computing device, such as Personal Data Assistants (PDAs), pagers, laptop computers, desktop computers, wireless handsets, or any computing device including a wireless communications interface.

In some embodiments, any of the UEs 1801 and 1802 can comprise an Internet of Things (IoT) UE, which can comprise a network access layer designed for low-power IoT applications utilizing short-lived UE connections. An IoT UE can utilize technologies such as machine-to-machine (M2M) or machine-type communications (MTC) for exchanging data with an MTC server or device via a public land mobile network (PLMN), Proximity-Based Service (ProSe) or device-to-device (D2D) communication, sensor networks, or IoT networks. The M2M or MTC exchange of data may be a machine-initiated exchange of data. An IoT network describes interconnecting IoT UEs, which may include uniquely identifiable embedded computing devices (within the Internet infrastructure), with short-lived connections. The IoT UEs may execute background applications (e.g., keep-alive messages, status updates, etc.) to facilitate the connections of the IoT network.

The UEs 1801 and 1802 may be configured to connect, e.g., communicatively couple, with a radio access network (RAN) 1810 - the RAN 1810 may be, for example, an Evolved Universal Mobile Telecommunications System (UMTS) Terrestrial Radio Access Network (E-UTRAN), a NextGen RAN (NG RAN), or some other type of RAN. The UEs 1801 and 1802 utilize connections 1803 and 1804, respectively, each of which comprises a physical communications interface or layer (discussed in further detail below); in this example, the connections 1803 and 1804 are illustrated as an air interface to enable communicative coupling, and can be consistent with cellular communications protocols, such as a Global System for Mobile Communications (GSM) protocol, a code-division multiple access (CDMA) network protocol, a Push-to-Talk (PTT) protocol, a PTT over Cellular (POC) protocol, a Universal Mobile Telecommunications System (UMTS) protocol, a 3GPP Long Term Evolution (LTE) protocol, a fifth generation (5G) protocol, a New Radio (NR) protocol, and the like.

In this embodiment, the UEs 1801 and 1802 may further directly exchange communication data via a ProSe interface 1805. The ProSe interface 1805 may alternatively be referred to as a sidelink interface comprising one or more logical channels, including but not limited to a Physical Sidelink Control Channel (PSCCH), a Physical Sidelink Shared Channel (PSSCH), a Physical Sidelink Discovery Channel (PSDCH), and a Physical Sidelink Broadcast Channel (PSBCH).

The UE 1802 is shown to be configured to access an access point (AP) 1806 via connection 1807. The connection 1807 can comprise a local wireless connection, such as a connection consistent with any IEEE 802.11 protocol, wherein the AP 1806 would comprise a wireless fidelity (WiFi®) router. In this example, the AP 1806 is shown to be connected to the Internet without connecting to the core network of the wireless system (described in further detail below).

The RAN 1810 can include one or more access nodes that enable the connections 1803 and 1804. These access nodes (ANs) can be referred to as base stations (BSs), NodeBs, evolved NodeBs (eNBs), next Generation NodeBs (gNB), RAN nodes, and so forth, and can comprise ground stations (e.g., terrestrial access points) or satellite stations providing coverage within a geographic area (e.g., a cell). The RAN 1810 may include one or more RAN nodes for providing macrocells, e.g., macro RAN node 1811, and one or more RAN nodes for providing femtocells or picocells (e.g., cells having smaller coverage areas, smaller user capacity, or higher bandwidth compared to macrocells), e.g., low power (LP) RAN node 1812.

Any of the RAN nodes 1811 and 1812 can terminate the air interface protocol and can be the first point of contact for the UEs 1801 and 1802. In some embodiments, any of the RAN nodes 1811 and 1812 can fulfill various logical functions for the RAN 1810 including, but not limited to, radio network controller (RNC) functions such as radio bearer management, uplink and downlink dynamic radio resource management and data packet scheduling, and mobility management.

In accordance with some embodiments, the UEs 1801 and 1802 can be configured to communicate using Orthogonal Frequency-Division Multiplexing (OFDM) communication signals with each other or with any of the RAN nodes 1811 and 1812 over a multicarrier communication channel in accordance various communication techniques, such as, but not limited to, an Orthogonal Frequency-Division Multiple Access (OFDMA) communication technique (e.g., for downlink communications) or a Single Carrier Frequency Division Multiple Access (SC-FDMA) communication technique (e.g., for uplink and ProSe or sidelink communications), although the scope of the embodiments is not limited in this respect. The OFDM signals can comprise a plurality of orthogonal subcarriers.

In some embodiments, a downlink resource grid can be used for downlink transmissions from any of the RAN nodes 1811 and 1812 to the UEs 1801 and 1802, while uplink transmissions can utilize similar techniques. The grid can be a time-frequency grid, called a resource grid or time-frequency resource grid, which is the physical resource in the downlink in each slot. Such a time-frequency plane representation is a common practice for OFDM systems, which makes it intuitive for radio resource allocation. Each column and each row of the resource grid corresponds to one OFDM symbol and one OFDM subcarrier, respectively. The duration of the resource grid in the time domain corresponds to one slot in a radio frame. The smallest time-frequency unit in a resource grid is denoted as a resource element. Each resource grid comprises a number of resource blocks, which describe the mapping of certain physical channels to resource elements. Each resource block comprises a collection of resource elements; in the frequency domain, this may represent the smallest quantity of resources that currently can be allocated. There are several different physical downlink channels that are conveyed using such resource blocks.

The physical downlink shared channel (PDSCH) may carry user data and higher-layer signaling to the UEs 1801 and 1802. The physical downlink control channel (PDCCH) may carry information about the transport format and resource allocations related to the PDSCH channel, among other things. It may also inform the UEs 1801 and 1802 about the transport format, resource allocation, and H-ARQ (Hybrid Automatic Repeat Request) information related to the uplink shared channel. Typically, downlink scheduling (assigning control and shared channel resource blocks to the UE 102 within a cell) may be performed at any of the RAN nodes 1811 and 1812 based on channel quality information fed back from any of the UEs 1801 and 1802. The downlink resource assignment information may be sent on the PDCCH used for (e.g., assigned to) each of the UEs 1801 and 1802.

The PDCCH may use control channel elements (CCEs) to convey the control information. Each PDCCH may be transmitted using one or more of these CCEs, where each CCE may correspond to six sets of twelve physical resource elements known as resource element groups (REGs). Four Quadrature Phase Shift Keying (QPSK) symbols may be mapped to each REG. The PDCCH can be transmitted using one or more CCEs, depending on the size of the downlink control information (DCI) and the channel condition. The PDCCH may include different numbers of CCEs (e.g., aggregation level, L=1, 2, 4, 8, 16).

The RAN 1810 is shown to be communicatively coupled to a core network (CN) 1820 - via an S1 interface 1813. In embodiments, the CN 1820 may be an evolved packet core (EPC) network, a NextGen Packet Core (NPC) network, or some other type of CN. In this embodiment the S1 interface 1813 is split into two parts: the S1-U interface 1814, which carries traffic data between the RAN nodes 1811 and 1812 and the serving gateway (S-GW) 1822, and the S1-mobility management entity (MME) interface 1815, which is a signaling interface between the RAN nodes 1811 and 1812 and MMEs 1821.

In this embodiment, the CN 1820 comprises the MMEs 1821, the S-GW 1822, the Packet Data Network (PDN) Gateway (P-GW) 1823, and a home subscriber server (HSS) 1824. The MMEs 1821 may be similar in function to the control plane of legacy Serving General Packet Radio Service (GPRS) Support Nodes (SGSN).

The MMEs 1821 may manage mobility aspects in access such as gateway selection and tracking area list management. The HSS 1824 may comprise a database for network users, including subscription-related information to support the network entities' handling of communication sessions. The CN 1820 may comprise one or several HSSs 1824, depending on the number of mobile subscribers, on the capacity of the equipment, on the organization of the network, etc. For example, the HSS 1824 can provide support for routing/roaming, authentication, authorization, naming/addressing resolution, location dependencies, etc.

The S-GW 1822 may terminate the S1 interface 1813 towards the RAN 1810, and routes data packets between the RAN 1810 and the CN 1820. In addition, the S-GW 1822 may be a local mobility anchor point for inter-RAN node handovers and also may provide an anchor for inter-3GPP mobility. Other responsibilities may include lawful intercept, charging, and some policy enforcement.

The P-GW 1823 may terminate an SGi interface toward a PDN. The P-GW 1823 may route data packets between the EPC network 1823 and e20ernal networks such as a network including the application server 1830 (alternatively referred to as application function (AF)) via an Internet Protocol (IP) interface 1825. Generally, the application server 1830 may be an element offering applications that use IP bearer resources with the core network (e.g., UMTS Packet Services (PS) domain, LTE PS data services, etc.). In this embodiment, the P-GW 1823 is shown to be communicatively coupled to an application server 1830 via an IP communications interface 1825. The application server 1830 can also be configured to support one or more communication services (e.g., Voice-over-Internet Protocol (VoIP) sessions, PTT sessions, group communication sessions, social networking services, etc.) for the UEs 1801 and 1802 via the CN 1820.

The P-GW 1823 may further be a node for policy enforcement and charging data collection. Policy and Charging Enforcement Function (PCRF) 1826 is the policy and charging control element of the CN 1820. In a non-roaming scenario, there may be a single PCRF in the Home Public Land Mobile Network (HPLMN) associated with a UE's Internet Protocol Connectivity Access Network (IP-CAN) session. In a roaming scenario with local breakout of traffic, there may be two PCRFs associated with a UE's IP-CAN session: a Home PCRF (H-PCRF) within a HPLMN and a Visited PCRF (V-PCRF) within a Visited Public Land Mobile Network (VPLMN). The PCRF 1826 may be communicatively coupled to the application server 1830 via the P-GW 1823. The application server 1830 may signal the PCRF 1826 to indicate a new service flow and select the appropriate Quality of Service (QoS) and charging parameters. The PCRF 1826 may provision this rule into a Policy and Charging Enforcement Function (PCEF) (not shown) with the appropriate traffic flow template (TFT) and QoS class of identifier (QCI), which commences the QoS and charging as specified by the application server 1830.

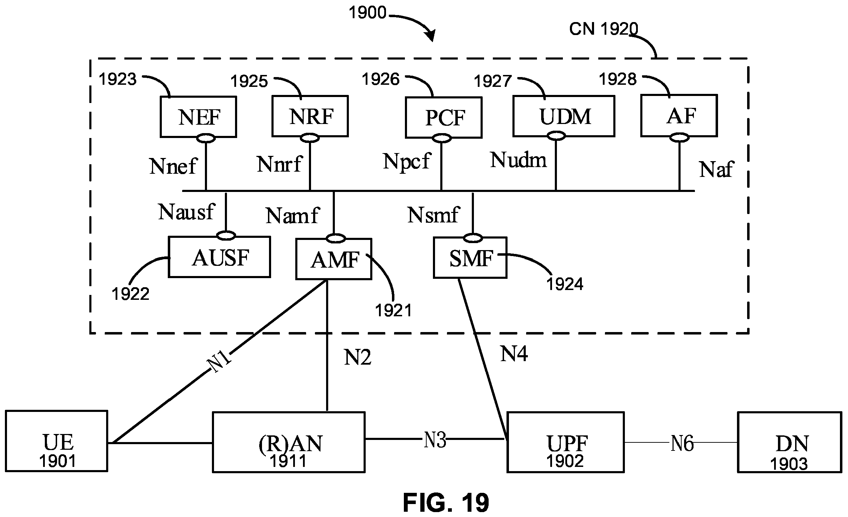

FIG. 19 illustrates an architecture of a system 1900 of a network in accordance with some embodiments. The system 1900 is shown to include a UE 1901, which may be the same or similar to UEs 1801 and 1802 discussed previously; a RAN node 1911, which may be the same or similar to RAN nodes 1811 and 1812 discussed previously; a User Plane Function (UPF) 1902; a Data network (DN) 1903, which may be, for example, operator services, Internet access or 3rd party services; and a 5G Core Network (5GC or CN) 1920.

The CN 1920 may include an Authentication Server Function (AUSF) 1922; a Core Access and Mobility Management Function (AMF) 1921; a Session Management Function (SMF) 1924; a Network Exposure Function (NEF) 1923; a Policy Control function (PCF) 1926; a Network Function (NF) Repository Function (NRF) 1925; a Unified Data Management (UDM) 1927; and an Application Function (AF) 1928. The CN 1920 may also include other elements that are not shown, such as a Structured Data Storage network function (SDSF), an Unstructured Data Storage network function (UDSF), and the like.

The UPF 1902 may act as an anchor point for intra-RAT and inter-RAT mobility, an external PDU session point of interconnect to DN 1903, and a branching point to support multi-homed PDU session. The UPF 1902 may also perform packet routing and forwarding, packet inspection, enforce user plane part of policy rules, lawfully intercept packets (UP collection); traffic usage reporting, perform QoS handling for user plane (e.g. packet filtering, gating, UL/DL rate enforcement), perform Uplink Traffic verification (e.g., SDF to QoS flow mapping), transport level packet marking in the uplink and downlink, and downlink packet buffering and downlink data notification triggering. UPF 1902 may include an uplink classifier to support routing traffic flows to a data network. The DN 1903 may represent various network operator services, Internet access, or third party services. NY 1903 may include, or be similar to application server 1830 discussed previously.

The AUSF 1922 may store data for authentication of UE 1901 and handle authentication related functionality. The AUSF 1922 may facilitate a common authentication framework for various access types.

The AMF 1921 may be responsible for registration management (e.g., for registering UE 1901, etc.), connection management, reachability management, mobility management, and lawful interception of AMF-related events, and access authentication and authorization. AMF 1921 may provide transport for SM messages between and SMF 1924, and act as a transparent proxy for routing SM messages. AMF 1921 may also provide transport for short message service (SMS) messages between UE 1901 and an SMS function (SMSF) (not shown by FIG. 19). AMF 1921 may act as Security Anchor Function (SEA), which may include interaction with the AUSF 1922 and the UE 1901, receipt of an intermediate key that was established as a result of the UE 1901 authentication process. Where USIM based authentication is used, the AMF 1921 may retrieve the security material from the AUSF 1922. AMF 1921 may also include a Security Context Management (SCM) function, which receives a key from the SEA that it uses to derive access-network specific keys. Furthermore, AMF 1921 may be a termination point of RAN CP interface (N2 reference point), a termination point of NAS (N1) signalling, and perform NAS ciphering and integrity protection.

AMF 1921 may also support NAS signalling with a UE 1901 over an N3 interworking-function (IWF) interface. The N3IWF may be used to provide access to untrusted entities. N33IWF may be a termination point for the N2 and N3 interfaces for control plane and user plane, respectively, and as such, may handle N2 signalling from SMF and AMF for PDU sessions and QoS, encapsulate/de-encapsulate packets for IPSec and N3 tunnelling, mark N3 user-plane packets in the uplink, and enforce QoS corresponding to N3 packet marking taking into account QoS requirements associated to such marking received over N2. N3IWF may also relay uplink and downlink control-plane NAS (N1) signalling between the UE 1901 and AMF 1921, and relay uplink and downlink user-plane packets between the UE 1901 and UPF 1902. The N3IWF also provides mechanisms for IPsec tunnel establishment with the UE 1901.

The SMF 1924 may be responsible for session management (e.g., session establishment, modify and release, including tunnel maintain between UPF and AN node); UE IP address allocation & management (including optional Authorization); Selection and control of UP function; Configures traffic steering at UPF to route traffic to proper destination; termination of interfaces towards Policy control functions; control part of policy enforcement and QoS; lawful intercept (for SM events and interface to LI System); termination of SM parts of NAS messages; downlink Data Notification; initiator of AN specific SM information, sent via AMF over N2 to AN; determine SSC mode of a session. The SMF 1924 may include the following roaming functionality: handle local enforcement to apply QoS SLAs (VPLMN); charging data collection and charging interface (VPLMN); lawful intercept (in VPLMN for SM events and interface to LI System); support for interaction with e20ernal DN for transport of signalling for PDU session authorization/authentication by e20ernal DN.

The NEF 1923 may provide means for securely exposing the services and capabilities provided by 3GPP network functions for third party, internal exposure/re-exposure, Application Functions (e.g., AF 1928), edge computing or fog computing systems, etc. In such embodiments, the NEF 1923 may authenticate, authorize, and/or throttle the AFs. NEF 1923 may also translate information exchanged with the AF 1928and information exchanged with internal network functions. For example, the NEF 1923 may translate between an AF-Service-Identifier and an internal 5GC information. NEF 1923 may also receive information from other network functions (NFs) based on exposed capabilities of other network functions. This information may be stored at the NEF 1923 as structured data, or at a data storage NF using a standardized interfaces. The stored information can then be re-exposed by the NEF 1923 to other NFs and AFs, and/or used for other purposes such as analytics.

The NRF 1925 may support service discovery functions, receive NF Discovery Requests from NF instances, and provide the information of the discovered NF instances to the NF instances. NRF 1925 also maintains information of available NF instances and their supported services.

The PCF 1926 may provide policy rules to control plane function(s) to enforce them, and may also support unified policy framework to govern network behaviour. The PCF 1926 may also implement a front end (FE) to access subscription information relevant for policy decisions in a UDR of UDM 1927.

The UDM 1927 may handle subscription-related information to support the network entities' handling of communication sessions, and may store subscription data of UE 1901. The UDM 1927 may include two parts, an application FE and a User Data Repository (UDR). The UDM may include a UDM FE, which is in charge of processing of credentials, location management, subscription management and so on. Several different front ends may serve the same user in different transactions. The UDM-FE accesses subscription information stored in the UDR and performs authentication credential processing; user identification handling; access authorization; registration/mobility management; and subscription management. The UDR may interact with PCF 1926. UDM 1927 may also support SMS management, wherein an SMS-FE implements the similar application logic as discussed previously.

The AF 1928 may provide application influence on traffic routing, access to the Network Capability Exposure (NCE), and interact with the policy framework for policy control. The NCE may be a mechanism that allows the 5GC and AF 1928 to provide information to each other via NEF 1923, which may be used for edge computing implementations. In such implementations, the network operator and third party services may be hosted close to the UE 1901 access point of attachment to achieve an efficient service delivery through the reduced end-to-end latency and load on the transport network. For edge computing implementations, the 5GC may select a UPF 1902 close to the UE 1901 and execute traffic steering from the UPF 1902 to DN 1903 via the N6 interface. This may be based on the UE subscription data, UE location, and information provided by the AF 1928. In this way, the AF 1928 may influence UPF (re)selection and traffic routing. Based on operator deployment, when AF 1928 is considered to be a trusted entity, the network operator may permit AF 1928 to interact directly with relevant NFs.

As discussed previously, the CN 1920 may include an SMSF, which may be responsible for SMS subscription checking and verification, and relaying SM messages to/from the UE 1901 to/from other entities, such as an SMS-GMSC/IWMSC/SMS-router. The SMS may also interact with AMF 1921 and UDM 1927 for notification procedure that the UE 1901 is available for SMS transfer (e.g., set a UE not reachable flag, and notifying UDM 1927 when UE 1901 is available for SMS).

The system 1900 may include the following service-based interfaces: Namf: Service-based interface exhibited by AMF; Nsmf: Service-based interface exhibited by SMF; Nnef: Service-based interface exhibited by NEF; Npcf: Service-based interface exhibited by PCF; Nudm: Service-based interface exhibited by UDM; Naf: Service-based interface exhibited by AF; Nnrf: Service-based interface exhibited by NRF; and Nausf: Service-based interface exhibited by AUSF.

The system 1900 may include the following reference points: N1: Reference point between the UE and the AMF; N2: Reference point between the (R)AN and the AMF; N3: Reference point between the (R)AN and the UPF; N4: Reference point between the SMF and the UPF; and N6: Reference point between the UPF and a Data Network. There may be many more reference points and/or service-based interfaces between the NF services in the NFs, however, these interfaces and reference points have been omitted for clarity. For example, an N5 reference point may be between the PCF and the AF; an N7 reference point may be between the PCF and the SMF; an N11 reference point between the AMF and SMF; etc. In some embodiments, the CN 1920 may include an Nx interface, which is an inter-CN interface between the MME (e.g., MME 1821) and the AMF 1921 in order to enable interworking between CN 1920 and CN 1820.

Although not shown by FIG. 19, system 1900 may include multiple RAN nodes 1911 wherein an Xn interface is defined between two or more RAN nodes 1911 (e.g., gNBs and the like) that connecting to 5GC 1920, between a RAN node 1911 (e.g., gNB) connecting to 5GC 1920 and an eNB (e.g., a RAN node 1811 of FIG. 18), and/or between two eNBs connecting to 5GC 1920.

In some implementations, the Xn interface may include an Xn user plane (Xn-U) interface and an Xn control plane (Xn-C) interface. The Xn-U may provide non-guaranteed delivery of user plane PDUs and support/provide data forwarding and flow control functionality. The Xn-C may provide management and error handling functionality, functionality to manage the Xn-C interface; mobility support for UE 1901 in a connected mode (e.g., CM-CONNECTED) including functionality to manage the UE mobility for connected mode between one or more RAN nodes 1911. The mobility support may include context transfer from an old (source) serving RAN node 1911 to new (target) serving RAN node 1911; and control of user plane tunnels between old (source) serving RAN node 1911 to new (target) serving RAN node 1911.

A protocol stack of the Xn-U may include a transport network layer built on Internet Protocol (IP) transport layer, and a GTP-U layer on top of a UDP and/or IP layer(s) to carry user plane PDUs. The Xn-C protocol stack may include an application layer signaling protocol (referred to as Xn Application Protocol (Xn-AP)) and a transport network layer that is built on an SCTP layer. The SCTP layer may be on top of an IP layer. The SCTP layer provides the guaranteed delivery of application layer messages. In the transport IP layer point-to-point transmission is used to deliver the signaling PDUs. In other implementations, the Xn-U protocol stack and/or the Xn-C protocol stack may be same or similar to the user plane and/or control plane protocol stack(s) shown and described herein.

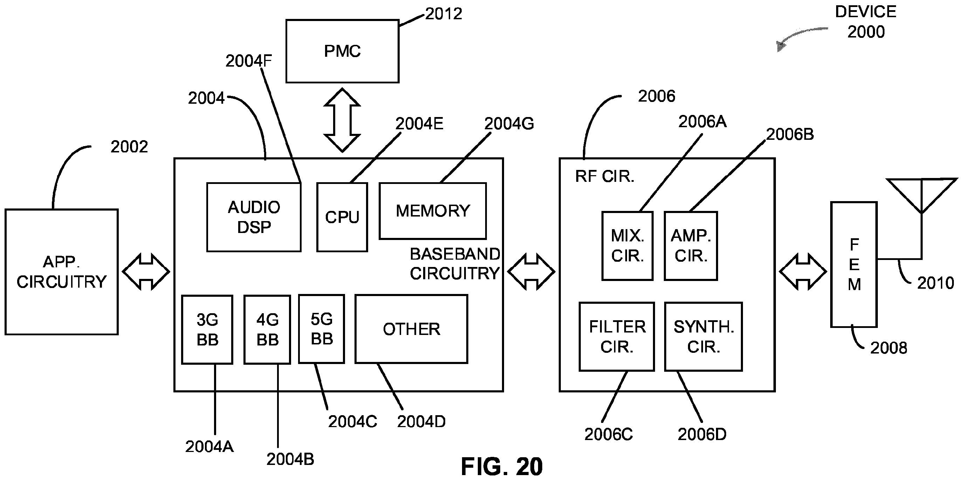

FIG. 20 illustrates example components of a device 2000 in accordance with some embodiments. In some embodiments, the device 2000 may include application circuitry 2002, baseband circuitry 2004, Radio Frequency (RF) circuitry 2006, front-end module (FEM) circuitry 2008, one or more antennas 2010, and power management circuitry (PMC) 2012 coupled together at least as shown. The components of the illustrated device 2000 may be included in a UE or a RAN node. In some embodiments, the device 2000 may include less elements (e.g., a RAN node may not utilize application circuitry 2002, and instead include a processor/controller to process IP data received from an EPC). In some embodiments, the device 2000 may include additional elements such as, for example, memory/storage, display, camera, sensor, or input/output (I/O) interface. In other embodiments, the components described below may be included in more than one device (e.g., said circuitries may be separately included in more than one device for Cloud-RAN (C-RAN) implementations).

The application circuitry 2002 may include one or more application processors. For example, the application circuitry 2002 may include circuitry such as, but not limited to, one or more single-core or multi-core processors. The processor(s) may include any combination of general-purpose processors and dedicated processors (e.g., graphics processors, application processors, etc.). The processors may be coupled with or may include memory/storage and may be configured to execute instructions stored in the memory/storage to enable various applications or operating systems to run on the device 2000. In some embodiments, processors of application circuitry 2002 may process IP data packets received from an EPC.

The baseband circuitry 2004 may include circuitry such as, but not limited to, one or more single-core or multi-core processors. The baseband circuitry 2004 may include one or more baseband processors or control logic to process baseband signals received from a receive signal path of the RF circuitry 2006 and to generate baseband signals for a transmit signal path of the RF circuitry 2006. Baseband processing circuitry 2004 may interface with the application circuitry 2002 for generation and processing of the baseband signals and for controlling operations of the RF circuitry 2006. For example, in some embodiments, the baseband circuitry 2004 may include a third generation (3G) baseband processor 2004A, a fourth generation (4G) baseband processor 2004B, a fifth generation (5G) baseband processor 2004C, or other baseband processor(s) 2004D for other existing generations, generations in development or to be developed in the future (e.g., sixth generation (6G), etc.). The baseband circuitry 2004 (e.g., one or more of baseband processors 2004A-D) may handle various radio control functions that enable communication with one or more radio networks via the RF circuitry 2006. In other embodiments, some or all of the functionality of baseband processors 2004A-D may be included in modules stored in the memory 2004G and executed via a Central Processing Unit (CPU) 2004E. The radio control functions may include, but are not limited to, signal modulation/demodulation, encoding/decoding, radio frequency shifting, etc. In some embodiments, modulation/demodulation circuitry of the baseband circuitry 2004 may include Fast-Fourier Transform (FFT), precoding, or constellation mapping/demapping functionality. In some embodiments, encoding/decoding circuitry of the baseband circuitry 2004 may include convolution, tail-biting convolution, turbo, Viterbi, or Low Density Parity Check (LDPC), Polar encoder/decoder functionality. Embodiments of modulation/demodulation and encoder/decoder functionality are not limited to these examples and may include other suitable functionality in other embodiments.

In some embodiments, the baseband circuitry 2004 may include one or more audio digital signal processor(s) (DSP) 2004F. The audio DSP(s) 2004F may be include elements for compression/decompression and echo cancellation and may include other suitable processing elements in other embodiments. Components of the baseband circuitry may be suitably combined in a single chip, a single chipset, or disposed on a same circuit board in some embodiments. In some embodiments, some or all of the constituent components of the baseband circuitry 2004 and the application circuitry 2002 may be implemented together such as, for example, on a system on a chip (SoC).

In some embodiments, the baseband circuitry 2004 may provide for communication compatible with one or more radio technologies. For example, in some embodiments, the baseband circuitry 2004 may support communication with an evolved universal terrestrial radio access network (EUTRAN) or other wireless metropolitan area networks (WMAN), a wireless local area network (WLAN), a wireless personal area network (WPAN). Embodiments in which the baseband circuitry 2004 is configured to support radio communications of more than one wireless protocol may be referred to as multi-mode baseband circuitry.

RF circuitry 2006 may enable communication with wireless networks using modulated electromagnetic radiation through a non-solid medium. In various embodiments, the RF circuitry 2006 may include switches, filters, amplifiers, etc. to facilitate the communication with the wireless network. RF circuitry 2006 may include a receive signal path which may include circuitry to down-convert RF signals received from the FEM circuitry 2008 and provide baseband signals to the baseband circuitry 2004. RF circuitry 2006 may also include a transmit signal path which may include circuitry to up-convert baseband signals provided by the baseband circuitry 2004 and provide RF output signals to the FEM circuitry 2008 for transmission.

In some embodiments, the receive signal path of the RF circuitry 2006 may include mixer circuitry 2006a, amplifier circuitry 2006b and filter circuitry 2006c. In some embodiments, the transmit signal path of the RF circuitry 2006 may include filter circuitry 2006c and mixer circuitry 2006a. RF circuitry 2006 may also include synthesizer circuitry 2006d for synthesizing a frequency for use by the mixer circuitry 2006a of the receive signal path and the transmit signal path. In some embodiments, the mixer circuitry 2006a of the receive signal path may be configured to down-convert RF signals received from the FEM circuitry 2008 based on the synthesized frequency provided by synthesizer circuitry 2006d. The amplifier circuitry 2006b may be configured to amplify the down-converted signals and the filter circuitry 2006c may be a lowpass filter (LPF) or band-pass filter (BPF) configured to remove unwanted signals from the down-converted signals to generate output baseband signals. Output baseband signals may be provided to the baseband circuitry 2004 for further processing. In some embodiments, the output baseband signals may be zero-frequency baseband signals, although this is not a requirement. In some embodiments, mixer circuitry 2006a of the receive signal path may comprise passive mixers, although the scope of the embodiments is not limited in this respect.

In some embodiments, the mixer circuitry 2006a of the transmit signal path may be configured to up-convert input baseband signals based on the synthesized frequency provided by the synthesizer circuitry 2006d to generate RF output signals for the FEM circuitry 2008. The baseband signals may be provided by the baseband circuitry 2004 and may be filtered by filter circuitry 2006c.

In some embodiments, the mixer circuitry 2006a of the receive signal path and the mixer circuitry 2006a of the transmit signal path may include two or more mixers and may be arranged for quadrature downconversion and upconversion, respectively. In some embodiments, the mixer circuitry 2006a of the receive signal path and the mixer circuitry 2006a of the transmit signal path may include two or more mixers and may be arranged for image rejection (e.g., Hartley image rejection). In some embodiments, the mixer circuitry 2006a of the receive signal path and the mixer circuitry 2006a may be arranged for direct downconversion and direct upconversion, respectively. In some embodiments, the mixer circuitry 2006a of the receive signal path and the mixer circuitry 2006a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 2006 may include analog-to-digital converter (ADC) and digital-to-analog converter (DAC) circuitry and the baseband circuitry 2004 may include a digital baseband interface to communicate with the RF circuitry 2006.

In some dual-mode embodiments, a separate radio IC circuitry may be provided for processing signals for each spectrum, although the scope of the embodiments is not limited in this respect.

In some embodiments, the synthesizer circuitry 2006d may be a fractional-N synthesizer or a fractional N/N+1 synthesizer, although the scope of the embodiments is not limited in this respect as other types of frequency synthesizers may be suitable. For example, synthesizer circuitry 2006d may be a delta-sigma synthesizer, a frequency multiplier, or a synthesizer comprising a phase-locked loop with a frequency divider.

The synthesizer circuitry 2006d may be configured to synthesize an output frequency for use by the mixer circuitry 2006a of the RF circuitry 2006 based on a frequency input and a divider control input. In some embodiments, the synthesizer circuitry 2006d may be a fractional N/N+1 synthesizer.

In some embodiments, frequency input may be provided by a voltage controlled oscillator (VCO), although that is not a requirement. Divider control input may be provided by either the baseband circuitry 2004 or the applications processor 2002 depending on the desired output frequency. In some embodiments, a divider control input (e.g., N) may be determined from a look-up table based on a channel indicated by the applications processor 2002.

Synthesizer circuitry 2006d of the RF circuitry 2006 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 2006d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 2006 may include an IQ/polar converter.

FEM circuitry 2008 may include a receive signal path which may include circuitry configured to operate on RF signals received from one or more antennas 2010, amplify the received signals and provide the amplified versions of the received signals to the RF circuitry 2006 for further processing. FEM circuitry 2008 may also include a transmit signal path which may include circuitry configured to amplify signals for transmission provided by the RF circuitry 2006 for transmission by one or more of the one or more antennas 2010. In various embodiments, the amplification through the transmit or receive signal paths may be done solely in the RF circuitry 2006, solely in the FEM 2008, or in both the RF circuitry 2006 and the FEM 2008.

In some embodiments, the FEM circuitry 2008 may include a TX/RX switch to switch between transmit mode and receive mode operation. The FEM circuitry may include a receive signal path and a transmit signal path. The receive signal path of the FEM circuitry may include an LNA to amplify received RF signals and provide the amplified received RF signals as an output (e.g., to the RF circuitry 2006). The transmit signal path of the FEM circuitry 2008 may include a power amplifier (PA) to amplify input RF signals (e.g., provided by RF circuitry 2006), and one or more filters to generate RF signals for subsequent transmission (e.g., by one or more of the one or more antennas 2010).

In some embodiments, the PMC 2012 may manage power provided to the baseband circuitry 2004. In particular, the PMC 2012 may control power-source selection, voltage scaling, battery charging, or DC-to-DC conversion. The PMC 2012 may often be included when the device 2000 is capable of being powered by a battery, for example, when the device is included in a UE. The PMC 2012 may increase the power conversion efficiency while providing desirable implementation size and heat dissipation characteristics.

While FIG. 20 shows the PMC 2012 coupled only with the baseband circuitry 2004. However, in other embodiments, the PMC 20 12 may be additionally or alternatively coupled with, and perform similar power management operations for, other components such as, but not limited to, application circuitry 2002, RF circuitry 2006, or FEM 2008.

In some embodiments, the PMC 2012 may control, or otherwise be part of, various power saving mechanisms of the device 2000. For example, if the device 2000 is in an RRC_Connected state, where it is still connected to the RAN node as it expects to receive traffic shortly, then it may enter a state known as Discontinuous Reception Mode (DRX) after a period of inactivity. During this state, the device 2000 may power down for brief intervals of time and thus save power.

If there is no data traffic activity for an extended period of time, then the device 2000 may transition off to an RRC_Idle state, where it disconnects from the network and does not perform operations such as channel quality feedback, handover, etc. The device 2000 goes into a very low power state and it performs paging where again it periodically wakes up to listen to the network and then powers down again. The device 2000 may not receive data in this state, in order to receive data, it must transition back to RRC_Connected state.

An additional power saving mode may allow a device to be unavailable to the network for periods longer than a paging interval (ranging from seconds to a few hours). During this time, the device is totally unreachable to the network and may power down completely. Any data sent during this time incurs a large delay and it is assumed the delay is acceptable.

Processors of the application circuitry 2002 and processors of the baseband circuitry 2004 may be used to execute elements of one or more instances of a protocol stack. For example, processors of the baseband circuitry 2004, alone or in combination, may be used execute Layer 3, Layer 2, or Layer 1 functionality, while processors of the application circuitry 2004 may utilize data (e.g., packet data) received from these layers and further execute Layer 4 functionality (e.g., transmission communication protocol (TCP) and user datagram protocol (UDP) layers). As referred to herein, Layer 3 may comprise a radio resource control (RRC) layer, described in further detail below. As referred to herein, Layer 2 may comprise a medium access control (MAC) layer, a radio link control (RLC) layer, and a packet data convergence protocol (PDCP) layer, described in further detail below. As referred to herein, Layer 1 may comprise a physical (PHY) layer of a UE/RAN node, described in further detail below.

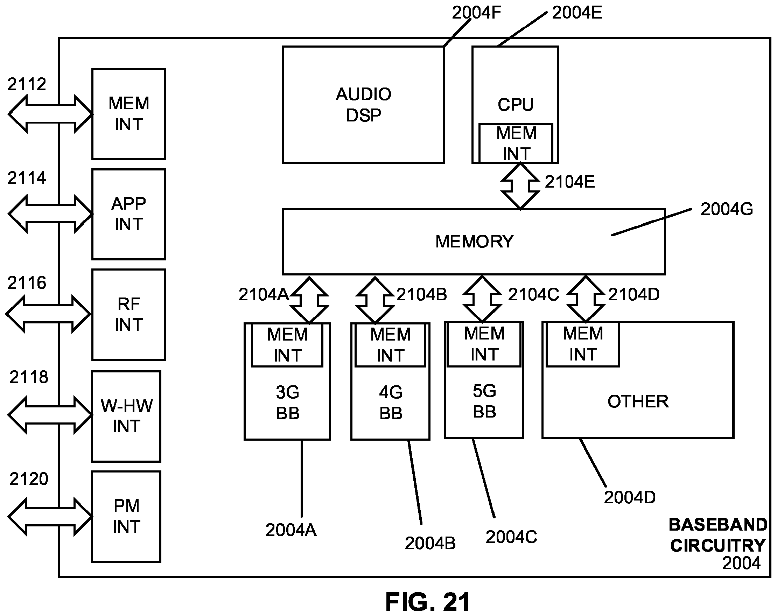

FIG. 21 illustrates example interfaces of baseband circuitry in accordance with some embodiments. As discussed above, the baseband circuitry 2004 of FIG. 20 may comprise processors 2004A-2004E and a memory 2004G utilized by said processors. Each of the processors 2004A-2004E may include a memory interface, 2104A-2104E, respectively, to send/receive data to/from the memory 2004G.

The baseband circuitry 2004 may further include one or more interfaces to communicatively couple to other circuitries/devices, such as a memory interface 2112 (e.g., an interface to send/receive data to/from memory external to the baseband circuitry 2004), an application circuitry interface 2114 (e.g., an interface to send/receive data to/from the application circuitry 2002 of FIG. 20), an RF circuitry interface 2116 (e.g., an interface to send/receive data to/from RF circuitry 2006 of FIG. 20), a wireless hardware connectivity interface 2118 (e.g., an interface to send/receive data to/from Near Field Communication (NFC) components, Bluetooth® components (e.g., Bluetooth® Low Energy), Wi-Fi® components, and other communication components), and a power management interface 2120 (e.g., an interface to send/receive power or control signals to/from the PMC 2012.

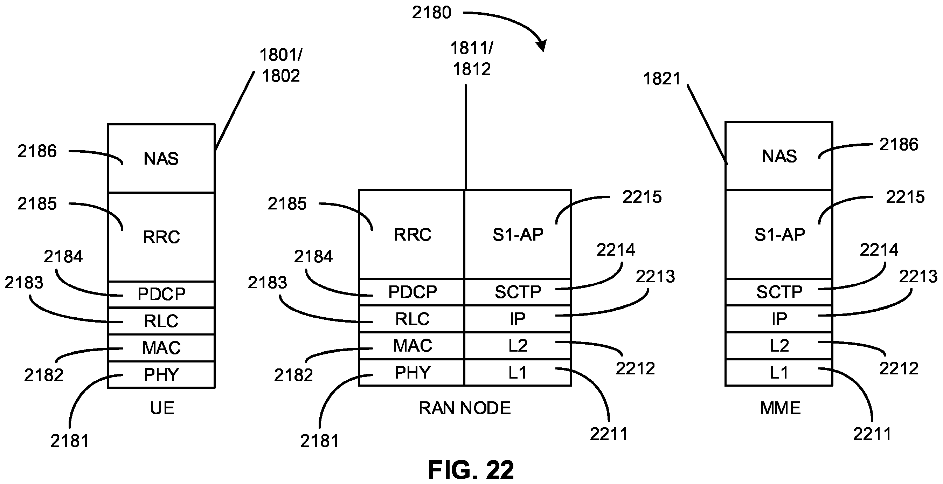

FIG. 22 is an illustration of a control plane protocol stack in accordance with some embodiments. In this embodiment, a control plane 2200 is shown as a communications protocol stack between the UE 1801 (or alternatively, the UE 1802), the RAN node 1811 (or alternatively, the RAN node 1812), and the MME 1821.

The PHY layer 2201 may transmit or receive information used by the MAC layer 2202 over one or more air interfaces. The PHY layer 2201 may further perform link adaptation or adaptive modulation and coding (AMC), power control, cell search (e.g., for initial synchronization and handover purposes), and other measurements used by higher layers, such as the RRC layer 2205. The PHY layer 2201 may still further perform error detection on the transport channels, forward error correction (FEC) coding/decoding of the transport channels, modulation/demodulation of physical channels, interleaving, rate matching, mapping onto physical channels, and Multiple Input Multiple Output (MIMO) antenna processing.

The MAC layer 2202 may perform mapping between logical channels and transport channels, multiplexing of MAC service data units (SDUs) from one or more logical channels onto transport blocks (TB) to be delivered to PHY via transport channels, de-multiplexing MAC SDUs to one or more logical channels from transport blocks (TB) delivered from the PHY via transport channels, multiplexing MAC SDUs onto TBs, scheduling information reporting, error correction through hybrid automatic repeat request (HARQ), and logical channel prioritization.

The RLC layer 2203 may operate in a plurality of modes of operation, including: Transparent Mode (TM), Unacknowledged Mode (UM), and Acknowledged Mode (AM). The RLC layer 2203 may execute transfer of upper layer protocol data units (PDUs), error correction through automatic repeat request (ARQ) for AM data transfers, and concatenation, segmentation and reassembly of RLC SDUs for UM and AM data transfers. The RLC layer 2203 may also execute re-segmentation of RLC data PDUs for AM data transfers, reorder RLC data PDUs for UM and AM data transfers, detect duplicate data for UM and AM data transfers, discard RLC SDUs for UM and AM data transfers, detect protocol errors for AM data transfers, and perform RLC re-establishment.

The PDCP layer 2204 may execute header compression and decompression of IP data, maintain PDCP Sequence Numbers (SNs), perform in-sequence delivery of upper layer PDUs at re-establishment of lower layers, eliminate duplicates of lower layer SDUs at re-establishment of lower layers for radio bearers mapped on RLC AM, cipher and decipher control plane data, perform integrity protection and integrity verification of control plane data, control timer-based discard of data, and perform security operations (e.g., ciphering, deciphering, integrity protection, integrity verification, etc.).

The main services and functions of the RRC layer 2205 may include broadcast of system information (e.g., included in Master Information Blocks (MIBs) or System Information Blocks (SIBs) related to the non-access stratum (NAS)), broadcast of system information related to the access stratum (AS), paging, establishment, maintenance and release of an RRC connection between the UE and E-UTRAN (e.g., RRC connection paging, RRC connection establishment, RRC connection modification, and RRC connection release), establishment, configuration, maintenance and release of point to point Radio Bearers, security functions including key management, inter radio access technology (RAT) mobility, and measurement configuration for UE measurement reporting. Said MIBs and SIBs may comprise one or more information elements (IEs), which may each comprise individual data fields or data structures.

The UE 1801 and the RAN node 1811 may utilize a Uu interface (e.g., an LTE-Uu or NR-Uu interface) to exchange control plane data via a protocol stack comprising the PHY layer 2201, the MAC layer 2202, the RLC layer 2203, the PDCP layer 2204, and the RRC layer 2205.

The non-access stratum (NAS) protocols 2206 form the highest stratum of the control plane between the UE 1801 and the MME 1821. The NAS protocols 2206 support the mobility of the UE 1801 and the session management procedures to establish and maintain IP connectivity between the UE 1801 and the P-GW 1823.

The S1 Application Protocol (S1-AP) layer 2215 may support the functions of the S1 interface and comprise Elementary Procedures (EPs). An EP is a unit of interaction between the RAN node 1811 and the CN 1820. The S1-AP layer services may comprise two groups: UE-associated services and non UE-associated services. These services perform functions including, but not limited to: E-UTRAN Radio Access Bearer (E-RAB) management, UE capability indication, mobility, NAS signaling transport, RAN Information Management (RIM), and configuration transfer.

The Stream Control Transmission Protocol (SCTP) layer (alternatively referred to as the SCTP/IP layer) 2214 may ensure reliable delivery of signaling messages between the RAN node 1811 and the MME 1821 based, in part, on the IP protocol, supported by the IP layer 2213. The L2 layer 2212 and the L1 layer 2211 may refer to communication links (e.g., wired or wireless) used by the RAN node and the MME to exchange information.

The RAN node 1811 and the MME 1821 may utilize an S1-MME interface to exchange control plane data via a protocol stack comprising the L1 layer 2211, the L2 layer 2212, the IP layer 2213, the SCTP layer 2214, and the S1-AP layer 2215.

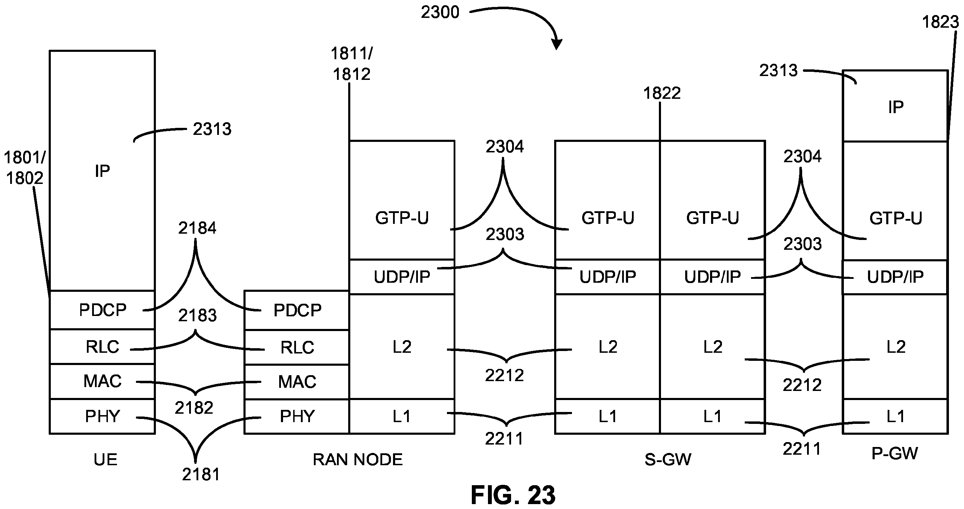

FIG. 23 is an illustration of a user plane protocol stack in accordance with some embodiments. In this embodiment, a user plane 2300 is shown as a communications protocol stack between the UE 1801 (or alternatively, the UE 1802), the RAN node 1811 (or alternatively, the RAN node 1812), the S-GW 1822, and the P-GW 1823. The user plane 2300 may utilize at least some of the same protocol layers as the control plane 2200. For example, the UE 1801 and the RAN node 1811 may utilize a Uu interface (e.g., an LTE-Uu or NR-Uu interface) to exchange user plane data via a protocol stack comprising the PHY layer 2201, the MAC layer 2202, the RLC layer 2203, the PDCP layer 2204.

The General Packet Radio Service (GPRS) Tunneling Protocol for the user plane (GTP-U) layer 2304 may be used for carrying user data within the GPRS core network and between the radio access network and the core network. The user data transported can be packets in any of IPv4, IPv6, or PPP formats, for example. The UDP and IP security (UDP/IP) layer 2303 may provide checksums for data integrity, port numbers for addressing different functions at the source and destination, and encryption and authentication on the selected data flows. The RAN node 1811 and the S-GW 1822 may utilize an S1-U interface to exchange user plane data via a protocol stack comprising the L1 layer 2211, the L2 layer 2212, the UDP/IP layer 2303, and the GTP-U layer 2304. The S-GW 1822 and the P-GW 1823 may utilize an S5/S8a interface to exchange user plane data via a protocol stack comprising the L1 layer 2211, the L2 layer 2212, the UDP/IP layer 2303, and the GTP-U layer 2304. As discussed above with respect to FIG. 22, NAS protocols support the mobility of the UE 1801 and the session management procedures to establish and maintain IP connectivity between the UE 1801 and the P-GW 1823.

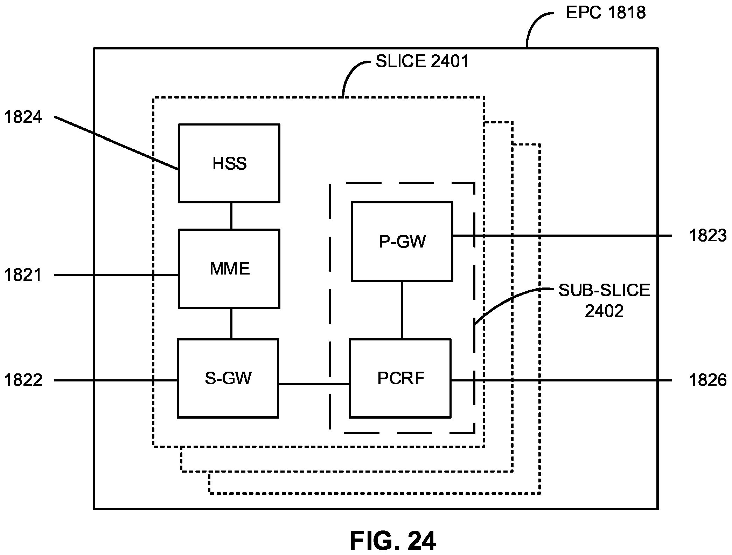

FIG. 24 illustrates components of a core network in accordance with some embodiments. The components of the CN 1820 may be implemented in one physical node or separate physical nodes including components to read and execute instructions from a machine-readable or computer-readable medium (e.g., a non-transitory or non-transitory machine-readable storage medium). In embodiments, the components of CN 1920 may be implemented in a same or similar manner as discussed herein with regard to the components of CN 1820. In some embodiments, Network Functions Virtualization (NFV) is utilized to virtualize any or all of the above described network node functions via executable instructions stored in one or more computer readable storage mediums (described in further detail below). A logical instantiation of the CN 1820 may be referred to as a network slice 2401. A logical instantiation of a portion of the CN 1820 may be referred to as a network sub-slice 2402 (e.g., the network sub-slice 2402 is shown to include the PGW 1823 and the PCRF 1826).

NFV architectures and infrastructures may be used to virtualize one or more network functions, alternatively performed by proprietary hardware, onto physical resources comprising a combination of industry-standard server hardware, storage hardware, or switches. In other words, NFV systems can be used to execute virtual or reconfigurable implementations of one or more EPC components/functions.

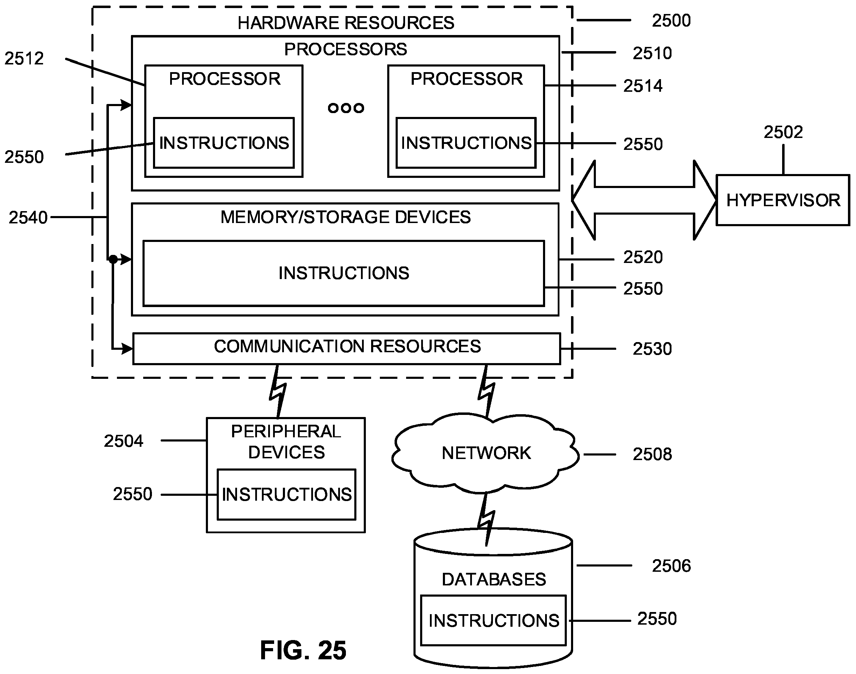

FIG. 25 is a block diagram illustrating components, according to some example embodiments, able to read instructions from a machine-readable or computer-readable medium (e.g., a non-transitory machine-readable storage medium) and perform any one or more of the methodologies discussed herein. Specifically, FIG. 25 shows a diagrammatic representation of hardware resources 2500 including one or more processors (or processor cores) 2510, one or more memory/storage devices 2520, and one or more communication resources 2530, each of which may be communicatively coupled via a bus 2540. For embodiments where node virtualization (e.g., NFV) is utilized, a hypervisor 2502 may be executed to provide an execution environment for one or more network slices/sub-slices to utilize the hardware resources 2500

The processors 2510 (e.g., a central processing unit (CPU), a reduced instruction set computing (RISC) processor, a complex instruction set computing (CISC) processor, a graphics processing unit (GPU), a digital signal processor (DSP) such as a baseband processor, an application specific integrated circuit (ASIC), a radio-frequency integrated circuit (RFIC), another processor, or any suitable combination thereof) may include, for example, a processor 2512 and a processor 2514.

The memory/storage devices 2520 may include main memory, disk storage, or any suitable combination thereof. The memory/storage devices 2520 may include, but are not limited to any type of volatile or non-volatile memory such as dynamic random access memory (DRAM), static random-access memory (SRAM), erasable programmable read-only memory (EPROM), electrically erasable programmable read-only memory (EEPROM), Flash memory, solid-state storage, etc.

The communication resources 2530 may include interconnection or network interface components or other suitable devices to communicate with one or more peripheral devices 2504 or one or more databases 2506 via a network 2508. For example, the communication resources 2530 may include wired communication components (e.g., for coupling via a Universal Serial Bus (USB)), cellular communication components, NFC components, Bluetooth® components (e.g., Bluetooth® Low Energy), Wi-Fi® components, and other communication components.

Instructions 2550 may comprise software, a program, an application, an applet, an app, or other executable code for causing at least any of the processors 2510 to perform any one or more of the methodologies discussed herein. The instructions 2550 may reside, completely or partially, within at least one of the processors 2510 (e.g., within the processor's cache memory), the memory/storage devices 2520, or any suitable combination thereof. Furthermore, any portion of the instructions 2550 may be transferred to the hardware resources 2500 from any combination of the peripheral devices 2504 or the databases 2506. Accordingly, the memory of processors 2510, the memory/storage devices 2520, the peripheral devices 2504, and the databases 2506 are examples of computer-readable and machine-readable media.

In some embodiments, the electronic device(s), network(s), system(s), chip(s) or component(s), or portions or implementations thereof, of Figures herein may be configured to perform one or more processes, techniques, or methods as described herein, or portions thereof.

The foregoing description of one or more implementations provides illustration and description, but is not intended to be exhaustive or to limit the scope of embodiments to the precise form disclosed. Modifications and variations are possible in light of the above teachings or may be acquired from practice of various embodiments The present invention is defined solely by the appended laims.

**Claims**

**1.** Processing circuitry for a wireless communication device, the processing circuitry to provide a wireless communication interface to transmit a signal or to receive a signal, the signal comprising a plurality of physical resource blocks generated depending on a resource block grid structure for a given channel bandwidth (104; 310) and a given frequency range, the resource block grid structure comprising:

a reference alignment within the given channel bandwidth (104; 310) for a plurality of contiguous reference resource blocks corresponding to a reference subcarrier spacing;

at least one further alignment within the given channel bandwidth (104; 310) for a plurality of contiguous respective further resource blocks of a respective further subcarrier spacing, the further alignment to align a boundary of a further resource block with a boundary of one of the reference resource blocks;

wherein at least a subset of the resource blocks of the resource block grid structure are assigned as active resource blocks, the active resource blocks to define a transmission or reception bandwidth within the channel bandwidth and wherein the assignment of active resource blocks in the resource block grid structure is to preserve, at each end of the channel bandwidth (104; 310), at least a minimum guard band corresponding to the respective subcarrier spacing and the given channel bandwidth (104; 310) and the given frequency range;
wherein at least one resource block of the reference alignment or the at least one further alignment not selected for the subset of active resource blocks is a virtual resource block (512a-c, 514a-e) used for resource block indexing to identify resource blocks of a respective subcarrier spacing for the given channel bandwidth and the given frequency range;
wherein the at least one virtual resource block (512a-c, 514a-e) is not generally used for uplink or downlink communication at least by a user equipment; and
wherein the virtual resource blocks (512a-c, 514a-e) are resource blocks closest to one or more band edges of the given channel bandwidth (104; 310).

**2.** Processing circuitry of claim 1, wherein the at least one further subcarrier spacings form a nested resource block grid structure, wherein an n' further subcarrier spacing is 2n times the reference subcarrier spacing, wherein n is a natural number.

**3.** Processing circuitry of claim 1, wherein the virtual resource blocks (512a-c, 514a-e) are exceptionally used for uplink or downlink communication by a base station when at least one of Spectrum Emission Mask, SEM, and Adjacent Channel Leakage Ratio, ACLR, constraints at the base station are permitted to be overridden by the corresponding network deployment.

**4.** Processing circuitry of any one of claims 1 to 3, wherein one or more of the active resource blocks is allocated to a base station or to a user equipment for uplink or for downlink communications and/or wherein the reference alignment is to place the first plurality of contiguous reference resource blocks symmetrically with respect to a centre frequency of the channel bandwidth.

**5.** Processing circuitry of any one of the preceding claims, wherein the reference alignment is arranged to provide at least a minimum guard band for the reference sub-carrier spacing at each end of the given channel bandwidth (104; 310) and wherein all of the plurality of contiguous reference resource blocks are active resource blocks.

**6.** Processing circuitry of any one of the preceding claims wherein the reference subcarrier spacing is a minimum subcarrier spacing and depends on at least one of the given frequency range and the given channel bandwidth (104; 310) and/or wherein the plurality of contiguous reference resource blocks comprises a maximum number of resource blocks that can be accommodated by the given carrier bandwidth.

**7.** Transmit path circuitry for use in a device of a wireless communication network, the transmit path circuitry comprising:
a transmit processing unit comprising the processing circuitry of any one of claims 1 to 6, the transmit processing unit to map data for transmission to the resource blocks of the resource block grid structure, the transmission using a given subcarrier spacing and the mapping using active resource blocks from an alignment of the resource block grid structure corresponding to the given subcarrier spacing.

**8.** Receive path circuitry for use in a device of a wireless communication network, the receive path circuitry comprising:
a receive processing unit comprising the processing circuitry of any one of claims 1 to 6, the receive processing unit to extract data from a received wireless signal using the resource block grid structure, the received wireless signal having a given subcarrier spacing and the data extraction being performed on active blocks from an alignment of the resource block grid structure corresponding to the given subcarrier spacing.

**9.** A UE (1801, 1802) or a base station (1811, 1812) comprising at least one of:

the transmit path circuitry of claim 7; and
the receive path circuitry of claim 8.

**10.** A computer program comprising instructions which, when the program is executed by a computer, cause the computer to transmit a signal or to receive a signal, the signal comprising a plurality of physical resource blocks generated depending on a resource block structure for a channel bandwidth (104; 310) and a frequency range of a wireless communication system, the resource block grid structure comprising:

a reference alignment within the channel bandwidth (104; 310) for the frequency range for a plurality of contiguous reference resource blocks corresponding to a reference subcarrier spacing;
at least one further alignment within the given channel bandwidth (104; 310) for the given frequency range for a plurality of contiguous respective further resource blocks of a respective further sub-carrier spacing, the further alignment to align a boundary of a further resource block with a boundary of one of the reference resource blocks;
wherein at least a subset of the resource blocks of the reference alignment and the at least one further alignment are designated as active resource blocks for use in at least one of uplink or downlink wireless communication, the positions of active resource blocks within the resource block grid to preserve at each end of the channel bandwidth (104; 310), at least a minimum guard band corresponding to the respective subcarrier spacing and the channel bandwidth and the frequency range;

wherein at least one resource block of the reference alignment or the at least one further alignment not designated as the subset of active resource blocks is a virtual resource block for resource block indexing to identify resource blocks of a respective subcarrier spacing for the given channel bandwidth and the given frequency range;

wherein the at least one virtual resource block (512a-c, 514a-e) is not generally used for uplink or downlink communication at least by a user equipment; and

wherein the virtual resource blocks (512a-c, 514a-e) are resource blocks closest to one or more band edges of the given channel bandwidth.

**11.** A method of generating a resource block grid structure for a channel bandwidth (104; 310) and a frequency range of a wireless communication system to define physical resource blocks for transmission or reception of a wireless signal, the method comprising

determining a reference alignment within the channel bandwidth for the frequency range for a plurality of contiguous reference resource blocks corresponding to a reference subcarrier spacing;

determining at least one further alignment within the given channel bandwidth for the given frequency range for a plurality of contiguous respective further resource blocks of a respective further sub-carrier spacing, the further alignment to align a boundary of a further resource block with a boundary of one of the reference resource blocks; and

selecting from resource blocks of the reference alignment and the at least one further alignment, at least a subset of the resource blocks as active resource blocks for use in at least one of uplink or downlink wireless communication, the selection to preserve at each end of the given channel bandwidth, at least a minimum guard band corresponding to the respective subcarrier spacing and the channel bandwidth and the frequency range;

the method further comprising selecting at least one resource block of the reference alignment or the at least one further alignment not selected for the subset of active resource blocks as a virtual resource block (512a-c, 514a-e) used for resource block indexing to identify resource blocks of a respective subcarrier spacing for the given channel bandwidth and the given frequency range;

wherein the at least one virtual resource block (512a-c, 514a-e) is not generally used for uplink or downlink communication, and

wherein the virtual resource blocks are resource blocks closest to one or more band edges of the given channel bandwidth.

**12.** A computer-readable medium comprising instructions which, when executed by a computer, cause the computer to carry out the method of claim 11.

## Patentansprüche

**1.** Verarbeitungsschaltung für eine drahtlose Kommunikationsvorrichtung, wobei die Verarbeitungsschaltung eine drahtlose Kommunikationsschnittstelle zum Senden eines Signals oder zum Empfangen eines Signals bereitstellt, wobei das Signal eine Vielzahl von physikalischen Ressourcenblöcken umfasst, die in Abhängigkeit von einer Ressourcenblock-Gitterstruktur für eine gegebene Kanalbandbreite (104; 310) und einen gegebenen Frequenzbereich erzeugt werden, wobei die Ressourcenblock-Gitterstruktur umfasst:

eine Bezugsausrichtung innerhalb der gegebenen Kanalbandbreite (104; 310) für eine Vielzahl von aneinander angrenzenden Bezugsressourcenblöcken, die einem Bezugszwischenträgerabstand entsprechen;

mindestens eine weitere Ausrichtung innerhalb der gegebenen Kanalbandbreite (104; 310) für eine Vielzahl von angrenzenden jeweiligen weiteren Ressourcenblöcken eines jeweiligen weiteren Unterträgerabstands, wobei die weitere Ausrichtung dazu dient, eine Grenze eines weiteren Ressourcenblocks mit einer Grenze eines der Referenz-Ressourcenblöcke auszurichten;

wobei mindestens eine Teilmenge der Ressourcenblöcke der Ressourcenblock-Gitterstruktur als aktive Ressourcenblöcke zugewiesen werden, wobei die aktiven Ressourcenblöcke eine Sende- oder Empfangsbandbreite innerhalb der Kanalbandbreite definieren, und wobei die Zuweisung von aktiven Ressourcenblöcken in der Ressourcenblock-Gitterstruktur an jedem Ende der Kanalbandbreite (104; 310) mindestens ein minimales Schutzband erhalten soll, das dem jeweiligen Unterträgerabstand und der gegebenen Kanalbandbreite (104; 310) und dem gegebenen Frequenzbereich entspricht;
wobei mindestens ein Ressourcenblock der Referenzausrichtung oder die mindestens eine weitere Ausrichtung, die nicht für die Teilmenge der aktiven Ressourcenblöcke ausgewählt wurde, ein virtueller Ressourcenblock (512a-c, 514a-e) ist, der für die Ressourcenblockindizierung verwendet wird, um Ressourcenblöcke eines jeweiligen Unterträgerabstands für die gegebene Kanalbandbreite und den gegebenen Frequenzbereich zu identifizieren;
wobei der wenigstens eine virtuelle Ressourcenblock (512a-c, 514a-e) in dem Allgemeinen nicht für Uplink- oder Downlink-Kommunikation wenigstens durch eine Benutzervorrichtung verwendet wird; und
wobei die virtuellen Ressourcenblöcke (512a-c, 514a-e) Ressourcenblöcke sind, die am nächsten an einer oder mehreren Bandkanten der gegebenen Kanalbandbreite (104; 310) liegen.

**2.** Verarbeitungsschaltung nach Anspruch 1, wobei die mindestens einen weiteren Unterträgerabstände eine verschachtelte Ressourcenblock-Gitterstruktur bilden, wobei ein n' weiterer Unterträgerabstand das 2n-fache des Referenz-Hilfsträgerabstands beträgt, wobei n eine natürliche Zahl ist.

**3.** Verarbeitungsschaltung nach Anspruch 1, wobei die virtuellen Ressourcenblöcke (512a-c, 514a-e) ausnahmsweise für die Uplink- oder Downlink-Kommunikation durch eine Basisstation verwendet werden, wenn mindestens eine der Einschränkungen Spectrum Emission Mask, SEM, und Adjacent Channel Leakage Ratio, ACLR, an der Basisstation durch den entsprechenden Netzaufbau außer Kraft gesetzt werden darf.

**4.** Verarbeitungsschaltung nach einem der Ansprüche 1 bis 3, bei der einer oder mehrere der aktiven Ressourcenblöcke einer Basisstation oder einer Benutzervorrichtung für Uplink- oder Downlink-Kommunikation zugewiesen werden und/oder bei der die Bezugsausrichtung darin besteht, die erste Vielzahl von aneinandergrenzenden Bezugsressourcenblöcken symmetrisch in Bezug auf eine Mittenfrequenz der Kanalbandbreite anzuordnen.

**5.** Verarbeitungsschaltung nach irgendeinem der vorhergehenden Ansprüche, wobei die Referenzausrichtung angeordnet ist, um mindestens ein minimales Schutzband für den Referenzsubträgerabstand an jedem Ende der gegebenen Kanalbandbreite (104; 310) bereitzustellen, und wobei alle der Vielzahl von aneinandergrenzenden Referenz-Ressourcenblöcken aktive Ressourcenblöcke sind.

**6.** Verarbeitungsschaltung nach irgendeinem der vorhergehenden Ansprüche, wobei der Referenzunterträgerabstand ein minimaler Unterträgerabstand ist und von mindestens einem des gegebenen Frequenzbereichs und der gegebenen Kanalbandbreite (104; 310) abhängt und/oder wobei die Vielzahl von aneinander angrenzenden Referenz-Ressourcenblöcken eine maximale Anzahl von Ressourcenblöcken umfasst, die von der gegebenen Trägerbandbreite aufgenommen werden können.

**7.** Übertragungspfad-Schaltungsanordnung zur Verwendung in einer Vorrichtung eines drahtlosen Kommunikationsnetzwerks, wobei die Übertragungspfad-Schaltungsanordnung umfasst:
eine Übertragungsverarbeitungseinheit, die die Verarbeitungsschaltung eines der Ansprüche 1 bis 6 umfasst, wobei die Übertragungsverarbeitungseinheit Daten zur Übertragung auf die Ressourcenblöcke der Ressourcenblock-Gitterstruktur abbildet, wobei die Übertragung einen gegebenen Unterträgerabstand verwendet und die Abbildung aktive Ressourcenblöcke aus einer Ausrichtung der Ressourcenblock-Gitterstruktur verwendet, die dem gegebenen Unterträgerabstand entspricht.

**8.** Empfangspfad-Schaltungsanordnung zur Verwendung in einer Vorrichtung eines drahtlosen Kommunikationsnetzes, wobei die Empfangspfad-Schaltungsanordnung umfasst:
eine Empfangsverarbeitungseinheit mit der Verarbeitungsschaltung eines der Ansprüche 1 bis 6, wobei die Empfangsverarbeitungseinheit Daten aus einem empfangenen drahtlosen Signal unter Verwendung der Ressourcenblock-Gitterstruktur extrahiert, wobei das empfangene drahtlose Signal einen gegebenen Unterträgerabstand aufweist und die Datenextraktion an aktiven Blöcken aus einer Ausrichtung der Ressourcenblock-Gitterstruktur entsprechend dem gegebenen Unterträgerabstand durchgeführt wird.

**9.** UE (1801, 1802) oder eine Basisstation (1811, 1812), die mindestens eines der folgenden Elemente umfasst:

die Übertragungspfad-Schaltungsanordnung nach Anspruch 7; und
die Empfangspfadschaltung von Anspruch 8.

**10.** Computerprogramm mit Befehlen, die, wenn das Programm von einem Computer ausgeführt wird, den Computer veranlassen, ein Signal zu senden oder ein Signal zu empfangen, wobei das Signal eine Vielzahl von physikalischen Ressourcenblöcken umfasst, die in Abhängigkeit von einer Ressourcenblockstruktur für eine Kanalbandbreite (104; 310) und einen Frequenzbereich eines drahtlosen Kommunikationssystems erzeugt werden, wobei das Ressourcenblockgitter umfasst:

eine Bezugsausrichtung innerhalb der Kanalbandbreite (104; 310) für den Frequenzbereich für eine Vielzahl von aneinander angrenzenden Bezugsressourcenblöcken, die einem Bezugszwischenträgerabstand entsprechen;
mindestens eine weitere Ausrichtung innerhalb der gegebenen Kanalbandbreite (104; 310) für den gegebenen Frequenzbereich für eine Vielzahl von aneinander angrenzenden jeweiligen weiteren Ressourcenblöcken eines jeweiligen weiteren Unterträgerabstands, wobei die weitere Ausrichtung dazu dient, eine Grenze eines weiteren Ressourcenblocks mit einer Grenze eines der Referenzressourcenblöcke auszurichten;
wobei mindestens eine Teilmenge der Ressourcenblöcke der Referenzausrichtung und die mindestens eine weitere Ausrichtung als aktive Ressourcenblöcke zur Verwendung in der drahtlosen Uplink- und/oder Downlink-Kommunikation bestimmt sind, wobei die Positionen der aktiven Ressourcenblöcke innerhalb des Ressourcenblockgitters an jedem Ende der Kanalbandbreite (104; 310) mindestens ein minimales Schutzband erhalten bleiben, das dem jeweiligen Unterträgerabstand und der Kanalbandbreite und dem Frequenzbereich entspricht;
wobei mindestens ein Ressourcenblock der Referenzausrichtung oder die mindestens eine weitere Ausrichtung, die nicht als die Teilmenge von aktiven Ressourcenblöcken bezeichnet ist, ein virtueller Ressourcenblock für die Ressourcenblockindizierung ist, um Ressourcenblöcke eines jeweiligen Unterträgerabstands für die gegebene Kanalbandbreite und den gegebenen Frequenzbereich zu identifizieren;
wobei der mindestens eine virtuelle Ressourcenblock (512a-c, 514a-e) im Allgemeinen nicht für Uplink- oder Downlink-Kommunikation wenigstens durch eine Benutzervorrichtung verwendet wird; und
wobei die virtuellen Ressourcenblöcke (512a-c, 514a-e) Ressourcenblöcke sind, die am nächsten an einer oder mehreren Bandkanten der gegebenen Kanalbandbreite liegen.

**11.** Verfahren zum Erzeugen einer Ressourcenblock-Gitterstruktur für eine Kanalbandbreite (104; 310) und einen Frequenzbereich eines drahtlosen Kommunikationssystems, um physikalische Ressourcenblöcke zum Senden oder Empfangen eines drahtlosen Signals zu definieren, wobei das Verfahren umfasst:

Bestimmen einer Bezugsausrichtung innerhalb der Kanalbandbreite für den Frequenzbereich für eine Vielzahl von aneinandergrenzenden Bezugsressourcenblöcken, die einem Bezugszwischenträgerabstand entsprechen;
Bestimmen mindestens einer weiteren Ausrichtung innerhalb der gegebenen Kanalbandbreite für den gegebenen Frequenzbereich für eine Vielzahl von angrenzenden jeweiligen weiteren Ressourcenblöcken eines jeweiligen weiteren Unterträgerabstands, wobei die weitere Ausrichtung eine Grenze eines weiteren Ressourcenblocks mit einer Grenze eines der Referenz-Ressourcenblöcke ausrichtet; und
Auswählen aus den Ressourcenblöcken der Referenzausrichtung und der mindestens einen weiteren Ausrichtung mindestens einer Teilmenge der Ressourcenblöcke als aktive Ressourcenblöcke zur Verwendung in der drahtlosen Uplink- und/oder Downlink-Kommunikation, die Auswahl zur Erhaltung an jedem Ende der gegebenen Kanalbandbreite, mindestens eines minimalen Schutzbandes, das dem jeweiligen Unterträgerabstand und der Kanalbandbreite und dem Frequenzbereich entspricht;
wobei das Verfahren ferner das Auswählen mindestens eines Ressourcenblocks der Referenzausrichtung oder der mindestens einen weiteren Ausrichtung, die nicht für die Teilmenge der aktiven Ressourcenblöcke ausgewählt wurde, als einen virtuellen Ressourcenblock (512a-c, 514a-e) umfasst, der für die Ressourcenblockindizierung verwendet wird, um Ressourcenblöcke eines jeweiligen Unterträgerabstands für die gegebene Kanalbandbreite und den gegebenen Frequenzbereich zu identifizieren;
wobei der mindestens eine virtuelle Ressourcenblock (512a-c, 514a-e) im Allgemeinen nicht für Uplink- oder Downlink-Kommunikation verwendet wird, und wobei die virtuellen Ressourcenblöcke Ressourcenblöcke sind, die am nächsten an einer oder mehreren Bandkanten der gegebenen Kanalbandbreite liegen.

**12.** Computerlesbares Medium mit Befehlen, die, wenn sie von einem Computer ausgeführt werden, den Computer veranlassen, das Verfahren nach Anspruch 11 auszuführen.

## Revendications

**1.** Ensemble de circuits de traitement pour un dispositif de communication sans fil, l'ensemble de circuits de traitement étant destiné à fournir une interface de communication sans fil pour transmettre un signal ou pour recevoir un signal, le signal comprenant une pluralité de blocs de ressources physiques générés en fonction d'une structure de grille de blocs de ressources pour une largeur de bande de canal (104 ;

310) donnée et une gamme de fréquences donnée, la structure de grille de blocs de ressources comprenant :

un alignement de référence dans la largeur de bande de canal (104 ; 310) donnée pour une pluralité de blocs de ressources de référence contigus correspondant à un écartement de sous-porteuses de référence ;
au moins un autre alignement dans la largeur de bande de canal (104 ; 310) donnée pour une pluralité d'autres blocs de ressources respectifs contigus d'un autre écartement de sous-porteuses respectif, l'autre alignement étant destiné à aligner une frontière d'un autre bloc de ressource sur une frontière d'un des blocs de ressources de référence ;
dans lequel au moins un sous-ensemble des blocs de ressources de la structure de grille de blocs de ressources est assigné comme blocs de ressources actifs, les blocs de ressources actifs étant destinés à définir une largeur de bande de transmission ou de réception dans la largeur de bande de canal et dans lequel l'assignation de blocs de ressources actifs dans la structure de grille de blocs de ressources est destinée à préserver, à chaque extrémité de la largeur de bande de canal (104 ; 310), au moins une bande de garde minimale correspondant à l'écartement de sous-porteuses respectif et à la largeur de bande de canal (104 ; 310) donnée et la gamme de fréquences donnée ;
dans lequel au moins un bloc de ressource de l'alignement de référence ou de l'au moins un autre alignement non sélectionné pour le sous-ensemble de blocs de ressources actifs est un bloc de ressource virtuel (512a-c, 514a-e) utilisé pour une indexation de blocs de ressources pour identifier des blocs de ressources d'un écartement de sous-porteuses respectif pour la largeur de bande de canal donnée et la gamme de fréquences donnée ;
dans lequel l'au moins un bloc de ressource virtuel (512a-c, 514a-e) n'est généralement pas utilisé pour une communication de liaison montante ou de liaison descendante au moins par un équipement utilisateur ; et
dans lequel les blocs de ressources virtuels (512a-c, 514a-e) sont les blocs de ressources les plus proches d'une ou plusieurs limites de bande de la largeur de bande de canal (104 ; 310) donnée.

**2.** Ensemble de circuits de traitement selon la revendication 1, dans lequel l'au moins un autre écartement de sous-porteuses forme une structure de grille de blocs de ressources imbriquée, dans lequel un n' autre écartement de sous-porteuses est 2n fois l'écartement de sous-porteuses de référence, dans lequel n est un entier naturel.

**3.** Ensemble de circuits de traitement selon la revendication 1, dans lequel les blocs de ressources virtuels (512a-c, 514a-e) sont utilisés exceptionnellement pour une communication de liaison montante ou de liaison descendante par une station de base lorsqu'il est permis de passer outre à au moins une parmi des contraintes de masque d'émission de spectre, SEM, et de rapport de fuite en puissance dans les canaux adjacents, ACLR, à la station de base grâce au déploiement de réseau correspondant.

**4.** Ensemble de circuits de traitement selon l'une quelconque des revendications 1 à 3, dans lequel un ou plusieurs des blocs de ressources actifs sont alloués à une station de base ou à un équipement utilisateur pour des communications de liaison montante ou de liaison descendante et/ou dans lequel l'alignement de référence est destiné à placer la première pluralité de blocs de ressources de référence contigus de manière symétrique par rapport à une fréquence centrale de la largeur de bande de canal.

**5.** Ensemble de circuits de traitement selon l'une quelconque des revendications précédentes, dans lequel l'alignement de référence est agencé pour fournir au moins une bande de garde minimale pour l'écartement de sous-porteuses de référence à chaque extrémité de la largeur de bande de canal (104 ; 310) donnée et dans lequel tous les blocs de la pluralité de blocs de ressources de référence contigus sont des blocs de ressources actifs.

**6.** Ensemble de circuits de traitement selon l'une quelconque des revendications précédentes, dans lequel l'écartement de sous-porteuses de référence est un écartement de sous-porteuses minimal et dépend d'au moins une parmi la gamme de fréquences donnée et la largeur de bande de canal (104 ; 310) donnée et/ou dans lequel la pluralité de blocs de ressources de référence contigus comprend un nombre maximal de blocs de ressources que la largeur de bande de porteuse donnée peut contenir.

**7.** Ensemble de circuits de chemin de transmission destiné à être utilisé dans un dispositif d'un réseau de communication sans fil, l'ensemble de circuits de chemin de transmission comprenant :
une unité de traitement de transmission comprenant l'ensemble de circuits de traitement selon l'une quelconque des revendications 1 à 6, l'unité de traitement de transmission étant destinée à mapper des données pour une transmission sur les blocs de ressources de la structure de grille de blocs de ressources, la transmission utilisant un écartement de sous-porteuses donné et le mappage utilisant des blocs de ressources actifs provenant d'un alignement de la structure de grille de blocs de ressources correspondant à l'écartement de sous-porteuses donné.

**8.** Ensemble de circuits de chemin de réception destiné à être utilisé dans un dispositif d'un réseau de communication sans fil, l'ensemble de circuits de chemin de réception comprenant :
une unité de traitement de réception comprenant l'ensemble de circuits de traitement selon l'une quelconque des revendications 1 à 6, l'unité de traitement de réception étant destinée à extraire des données d'un signal sans fil reçu en utilisant la structure de grille de blocs de ressources, le signal sans fil reçu ayant un écartement de sous-porteuses donné et l'extraction de données étant réalisée sur des blocs actifs provenant d'un alignement de la structure de grille de blocs de ressources correspondant à l'écartement de sous-porteuses donné.

**9.** Un UE (1801, 1802) ou une station de base (1811, 1812) comprenant au moins un parmi :

l'ensemble de circuits de chemin de transmission selon la revendication 7 ; et
l'ensemble de circuits de chemin de réception selon la revendication 8.

**10.** Un programme d'ordinateur comprenant des instructions qui, lorsque le programme est exécuté par un ordinateur, amènent l'ordinateur à transmettre un signal ou à recevoir un signal, le signal comprenant une pluralité de blocs de ressources physiques générés en fonction d'une structure de blocs de ressources pour une largeur de bande de canal (104 ; 310) et d'une gamme de fréquences d'un système de communication sans fil, la structure de grille de blocs de ressources comprenant :

un alignement de référence dans la largeur de bande de canal (104 ; 310) pour la gamme de fréquences pour une pluralité de blocs de ressources de référence contigus correspondant à un écartement de sous-porteuses de référence ;
au moins un autre alignement dans la largeur de bande de canal (104 ; 310) donnée pour la gamme de fréquences donnée pour une pluralité d'autres blocs de ressources respectifs contigus d'un autre écartement de sous-porteuses respectif, l'autre alignement étant destiné à aligner une frontière d'un autre bloc de ressource sur une frontière d'un des blocs de ressources de référence ;
dans lequel au moins un sous-ensemble des blocs de ressources de l'alignement de référence et de l'au moins un autre alignement est désigné comme blocs de ressources actifs destinés à être utilisés dans au moins une parmi une communication sans fil de liaison montante ou de liaison descendante, les positions de blocs de ressources actifs dans la grille de blocs de ressources étant destinées à préserver à chaque extrémité de la largeur de bande de canal (104 ; 310) au moins une bande de garde minimale correspondant à l'écartement de sous-porteuses respectif et à la largeur de bande de canal et la gamme de fréquences ;
dans lequel au moins un bloc de ressource de l'alignement de référence ou de l'au moins un autre alignement non désigné comme sous-ensemble de blocs de ressources actifs est un bloc de ressource virtuel pour une indexation de blocs de ressources pour identifier des blocs de ressources d'un écartement de sous-porteuses respectif pour la largeur de bande de canal donnée et la gamme de fréquences donnée ;
dans lequel l'au moins un bloc de ressource virtuel (512a-c, 514a-e) n'est généralement pas utilisé pour une communication de liaison montante ou de liaison descendante au moins par un équipement utilisateur ; et
dans lequel les blocs de ressources virtuels (512a-c, 514a-e) sont les blocs de ressources les plus proches d'une ou plusieurs limites de bande de la largeur de bande de canal donnée.

**11.** Un procédé de génération d'une structure de grille de blocs de ressources pour une largeur de bande de canal (104 ; 310) et une gamme de fréquences d'un système de communication sans fil pour définir des blocs de ressources physiques pour une transmission ou une réception d'un signal sans fil, le procédé comprenant :

la détermination d'un alignement de référence dans la largeur de bande de canal pour la gamme de fréquences pour une pluralité de blocs de ressources de référence contigus correspondant à un écartement de sous-porteuses de référence ;
la détermination d'au moins un autre alignement dans la largeur de bande de canal donnée pour la gamme de fréquences donnée pour une pluralité d'autres blocs de ressources respectifs contigus d'un autre écartement de sous-porteuses respectif, l'autre alignement étant destiné à aligner une frontière d'un autre bloc de ressource sur une frontière d'un des blocs de ressources de référence ; et
la sélection dans des blocs de ressources de l'alignement de référence et de l'au moins un autre alignement, d'au moins un sous-ensemble des blocs de ressources comme blocs de ressources actifs destinés à être utilisés dans au moins une parmi une communication sans fil de liaison montante ou de liaison descendante, la sélection étant destinée à préserver à chaque extrémité de la largeur de bande de canal donnée au moins une bande de garde minimale correspondant à l'écartement de sous-porteuses respectif et à la largeur de bande de canal et la gamme de fréquences ;
le procédé comprenant en outre la sélection d'au moins un bloc de ressource de l'alignement de référence ou de l'au moins un autre alignement non sélectionné pour le sous-ensemble de blocs de ressources actifs comme bloc de ressource virtuel (512a-c, 514a-e) utilisé pour une indexation de blocs de ressources pour identifier des blocs de ressources d'un écartement de sous-porteuses respectif pour la largeur de bande de canal donnée et la gamme de fréquences donnée ;
dans lequel l'au moins un bloc de ressource virtuel (512a-c, 514a-e) n'est généralement pas utilisé pour une communication de liaison montante ou de liaison descendante, et
dans lequel les blocs de ressources virtuels sont les blocs de ressources les plus proches d'une ou plusieurs limites de bande de la largeur de bande de canal donnée.

**12.** Un support lisible par ordinateur comprenant des instructions qui, lorsqu'elles sont exécutées par un ordinateur, amènent l'ordinateur à effectuer le procédé selon la revendication 11.

104
Channel Bandwidth
(CBW)
Guard
band
108a
0
1
2
3
102
106
N
Guard
band
108b
-CBW/2
0
CBW/2
Resource block
Frequency


Figure 1

RB partition with $8f_0$: RB0, RB1

RB partition with $4f_0$: RB0, RB1, RB2, RB3

RB partition with $2f_0$: RB0, RB1, RB2, RB3

RB partition with $f_0$: RB0, RB1, RB2, RB3

frequency

Figure 2

310
5 MHz BW
312
314
316
SCS 15kHz
SCS 30kHz
SCS 30kHz
– alignment
0.25MHz
0.25MHz
0.52 MHz
0.52 MHz
0.43 MHz
0.61 MHz
+2.5MHz
0 MHz
-2.5MHz
0
9
10
0
9
10

**Figure 3**

Channel Bandwidth (CBW)
Guard band
Guard band
SCS=15kHz
SCS=30kHz
SCS=60kHz
0
1
2
3
$N_{max,15}$
0
1
$N_{max,30}$
0
$N_{max,60}$
-CBW/2
0
CBW/2
frequency

Figure 4

Channel Bandwidth (CBW)
Guard band
592a
Guard band
592b
SCS=15kHz
SCS=30kHz
SCS=60kHz
0
Start RB
End RB
Nmax,15
512a
552
554
514a
514b
514c
Start RB index
End RB index
Nmax,30
512b
562
564
514d
Start RB index
End RB index
Nmax,60
512c
572
574
514e
-CBW/2
0
CBW/2
frequency

Figure 5

5MHz bandwidth
SCS
15kHz
30kHz
15kHz
30kHz
15kHz
30kHz
Option 1: SU = 25/10 PRBs
Option 2: SU = 25/10 PRBs
Option 3b: SU = 24/10 PRBs
-CBW/2
0
CBW/2

Figure 6

10MHz bandwidth
SCS
15kHz
30kHz
60kHz
Option 1: SU = 52/24/11 PRBs
Option 2: SU = 51/23/10 PRBs
Option 3b: SU = 52/24/11 PRBs
-CBW/2
0
CBW/2

Figure 7

15MHz bandwidth
SCS
Option 1: SU = 79/37/17 PRBs
15kHz
30kHz
60kHz
Option 2: SU = 79/37/17 PRBs
15kHz
30kHz
60kHz
Option 3b: SU = 78/38/18 PRBs
15kHz
30kHz
60kHz
-CBW/2
0
CBW/2

Figure 8

20MHz bandwidth
SCS
15kHz
30kHz
60kHz
Option 1: SU = 106/51/23 PRBs
Option 2: SU = 105/50/23 PRBs
Option 3b: SU = 106/50/23 PRBs
-CBW/2
0
CBW/2

Figure 9

START
Determine reference alignment of RBs for reference subcarrier spacing
1010
Determine at least one further RB alignment for a respective further subcarrier spacing and align boundaries of RBs for the different subcarrier spacings
1020
Select at least a subset of indexed RBs of the aligned RB grid structure as “active” RBs for use in transmission and/or reception
1030
END

Figure 10

**Table 1**

| SCS [kHz] | 5MHz | 10MHz | 15MHz | 20 MHz | 25 MHz | 40 MHz | 50MHz | 60 MHz | 80 MHz | 100 MHz |
|---|---|---|---|---|---|---|---|---|---|---|
| | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ | $N_{RB}$ |
| 15 | 25 | 52 | 79 | 106 | 133 | 216 | 270 | N.A | N.A | N.A |
| 30 | 11 | 24 | 38 | 51 | 65 | 106 | 133 | 162 | 217 | 273 |
| 60 | N.A | 11 | 18 | 24 | 31 | 51 | 65 | 79 | 107 | 135 |

**Table 2**

| SCS [kHz] | 50MHz | 100MHz | 200MHz | 400 MHz |
|---|---|---|---|---|
| | $N_{RB}$ | $N_{RB}$ | $N_{RB}$ | $N_{RB}$ |
| 60 | 66 | 132 | 264 | N.A |
| 120 | 32 | 66 | 132 | 264 |

Figure 11

## Table 3

| SCS, kHz | Channel bandwidth, MHz | | | | | | | | | |
|---|---|---|---|---|---|---|---|---|---|---|
| | 5 | 10 | 15 | 20 | 25 | 40 | 50 | 60 | 80 | 100 |
| Option 1 | | | | | | | | | | |
| 15 KHz | 25 | 52 | 79 | 106 | 133 | 216 | 270 | NA | | |
| 30 KHz | 12 | 26 | 39 | 53 | 66 | 108 | 135 | 162 | 217 | 273 |
| 60 KHz | NA | 13 | 19 | 26 | 33 | 54 | 67 | 81 | 108 | 136 |
| Option 2 | | | | | | | | | | |
| 15 KHz | 27 | 55 | 83 | 111 | 138 | 222 | 277 | NA | | |
| 30 KHz | 13 | 27 | 41 | 55 | 69 | 111 | 138 | 166 | 222 | 277 |
| 60 KHz | NA | 13 | 20 | 27 | 34 | 55 | 69 | 83 | 111 | 138 |
| Option 3a | | | | | | | | | | |
| 15 KHz | 26 | 54 | 82 | 110 | 138 | 222 | 276 | NA | | |
| 30 KHz | 13 | 27 | 41 | 55 | 69 | 111 | 138 | 166 | 222 | 276 |
| 60 KHz | NA | 13 | 20 | 27 | 34 | 55 | 69 | 83 | 111 | 138 |
| Option 3b | | | | | | | | | | |
| 15 KHz | 24 | 52 | 80 | 108 | 136 | 220 | 276 | NA | | |
| 30 KHz | 12 | 26 | 40 | 54 | 68 | 110 | 138 | 164 | 222 | 276 |
| 60 KHz | NA | 13 | 20 | 27 | 34 | 55 | 69 | 82 | 110 | 138 |

# Figure 12

## Table 4

| SCS, kHz | Channel bandwidth, MHz | | | |
|---|---|---|---|---|
| | **50** | **100** | **200** | **400** |
| **Option 1** | | | | |
| **60 KHz** | 66 | 132 | 264 | NA |
| **120 KHz** | 33 | 66 | 132 | 264 |
| **Option 2** | | | | |
| **60 KHz** | 69 | 138 | 277 | NA |
| **120 KHz** | 34 | 69 | 138 | 277 |
| **Option 3a** | | | | |
| **60 KHz** | 68 | 138 | 276 | NA |
| **120 KHz** | 34 | 69 | 138 | 276 |
| **Option 3b** | | | | |
| **60 KHz** | 68 | 136 | 276 | NA |
| **120 KHz** | 34 | 69 | 138 | 276 |

# Figure 13

## Table 5

| SCS | Channel bandwidth, MHz | | | | | | | | | |
|---|---|---|---|---|---|---|---|---|---|---|
| | 5 | 10 | 15 | 20 | 25 | 40 | 50 | 60 | 80 | 100 |
| Option 1 | | | | | | | | | | |
| 15 KHz | 25 | 52 | 79 | 106 | 133 | 216 | 270 | | | |
| 30 KHz | 10 | 24 | 37 | 51 | 64 | 106 | 133 | 162 | 217 | 273 |
| 60 KHz | NA | 11 | 17 | 23 | 30 | 50 | 64 | 79 | 106 | 134 |
| Option 2 | | | | | | | | | | |
| 15 KHz | 25 | 51 | 79 | 105 | 132 | 216 | 269 | NA | | |
| 30 KHz | 10 | 23 | 37 | 50 | 65 | 105 | 132 | 162 | 216 | 273 |
| 60 KHz | NA | 10 | 17 | 23 | 30 | 50 | 64 | 79 | 107 | 134 |
| Option 3a | | | | | | | | | | |
| 15 KHz | 24 | 52 | 78 | 106 | 132 | 216 | 270 | NA | | |
| 30 KHz | 11 | 23 | 37 | 51 | 65 | 105 | 132 | 162 | 216 | 272 |
| 60 KHz | NA | 10 | 17 | 23 | 30 | 50 | 65 | 79 | 107 | 134 |
| Option 3b | | | | | | | | | | |
| 15 KHz | 24 | 52 | 78 | 106 | 132 | 216 | 270 | NA | | |
| 30 KHz | 10 | 24 | 38 | 50 | 64 | 106 | 132 | 162 | 216 | 272 |
| 60 KHz | NA | 11 | 18 | 23 | 30 | 51 | 65 | 78 | 106 | 134 |

# Figure 14

**Table 6**

| SCS | Channel bandwidth, MHz | | | |
|---|---|---|---|---|
| | 50 | 100 | 200 | 400 |
| **Option 1** | | | | |
| 60 KHz | 66 | 132 | 264 | NA |
| 120 KHz | 31 | 66 | 132 | 264 |
| **Option 2** | | | | |
| 60 KHz | 65 | 132 | 263 | NA |
| 120 KHz | 31 | 65 | 131 | 263 |
| **Option 3a** | | | | |
| 60 KHz | 66 | 132 | 264 | NA |
| 120 KHz | 32 | 65 | 132 | 264 |
| **Option 3b** | | | | |
| 60 KHz | 66 | 132 | 264 | NA |
| 120 KHz | 32 | 66 | 132 | 264 |

Figure 15

## Table 7

| SCS | Channel bandwidth, MHz | | | | | | | | | |
|---|---|---|---|---|---|---|---|---|---|---|
| | 5 | 10 | 15 | 20 | 25 | 40 | 50 | 60 | 80 | 100 |
| **Option 1** | | | | | | | | | | |
| 15 KHz | 0/24 | 0/51 | 0/78 | 0/105 | 0/132 | 0/215 | 0/269 | NA | | |
| 30 KHz | 1/10 | 1/24 | 1/37 | 1/51 | 1/64 | 1/106 | 1/133 | 0/161 | 0/216 | 0/272 |
| 60 KHz | NA | 1/11 | 1/17 | 2/24 | 2/31 | 2/51 | 2/65 | 1/79 | 1/106 | 1/134 |
| **Option 2** | | | | | | | | | | |
| 15 KHz | 1/25 | 2/52 | 2/80 | 3/107 | 3/134 | 3/218 | 4/272 | NA | | |
| 30 KHz | 2/11 | 2/24 | 2/38 | 3/52 | 2/66 | 3/107 | 3/134 | 2/163 | 3/218 | 2/274 |
| 60 KHz | NA | 2/11 | 2/18 | 2/24 | 2/31 | 3/52 | 3/66 | 2/80 | 2/108 | 2/135 |
| **Option 3a** | | | | | | | | | | |
| 15 KHz | 1/24 | 1/52 | 2/79 | 2/107 | 3/134 | 3/218 | 3/272 | NA | | |
| 30 KHz | 1/11 | 2/24 | 2/38 | 2/52 | 2/66 | 3/107 | 3/134 | 2/163 | 3/218 | 2/273 |
| 60 KHz | NA | 2/11 | 2/18 | 2/24 | 2/31 | 3/52 | 2/66 | 2/80 | 2/108 | 2/135 |
| **Option 3a** | | | | | | | | | | |
| 15 KHz | 0/23 | 0/51 | 1/78 | 1/106 | 2/133 | 2/217 | 3/272 | NA | | |
| 30 KHz | 1/10 | 1/24 | 1/38 | 2/51 | 2/65 | 2/107 | 3/134 | 1/162 | 2/217 | 2/273 |
| 60 KHz | NA | 1/11 | 1/18 | 2/24 | 2/31 | 2/52 | 2/66 | 2/79 | 2/107 | 2/135 |

**Figure 16**

**Table 8**

| SCS | Channel bandwidth, MHz | | | |
|---|---|---|---|---|
| | 50 | 100 | 200 | 400 |
| Option 1 | | | | |
| 60 KHz | 0/65 | 0/131 | 0/263 | NA |
| 120 KHz | 1/31 | 0/65 | 0/131 | 0/263 |
| Option 2 | | | | |
| 60 KHz | 2/66 | 3/134 | 7/269 | NA |
| 120 KHz | 2/32 | 2/66 | 4/134 | 7/269 |
| Option 3a | | | | |
| 60 KHz | 1/66 | 3/134 | 6/269 | NA |
| 120 KHz | 1/32 | 2/66 | 3/134 | 6/269 |
| Option 3b | | | | |
| 60 KHz | 1/66 | 2/133 | 6/269 | NA |
| 120 KHz | 1/32 | 1/66 | 3/134 | 6/269 |

Figure 17

1800
APPLICATION SERVER
1830
1825
1823
1826
EPC 1820
HSS
1824
P-GW
PCRF
MME
1821
S-GW
1822
1815
S1
1813
1814
E-UTRAN 1810
1811
MACRO RAN NODE
1812
LP RAN NODE
1803
1804
1805
UE
UE
1801
1802
1807
AP
1806

FIG. 18

1900
CN 1920
NEF
1923
NRF
1925
PCF
1926
UDM
1927
AF
1928
Nnef
Nnrf
Npcf
Nudm
Naf
Nausf
Namf
Nsmf
AUSF
1922
AMF
1921
SMF
1924
N1
N2
N3
N4
N6
UE
1901
(R)AN
1911
UPF
1902
DN
1903

FIG. 19

DEVICE
2000
APP.
CIRCUITRY
2002
BASEBAND
CIRCUITRY
2004
3G
BB
2004A
4G
BB
2004B
5G
BB
2004C
OTHER
2004D
CPU
2004E
AUDIO
DSP
2004F
MEMORY
2004G
PMC
2012
RF CIR.
2006
MIX.
CIR.
2006A
AMP.
CIR.
2006B
FILTER
CIR.
2006C
SYNTH.
CIR.
2006D
F
E
M
2008
2010

FIG. 20

BASEBAND
CIRCUITRY
2004
AUDIO
DSP
2004F
CPU
MEM
INT
2004E
2104E
MEMORY
2004G
2104D
MEM
INT
OTHER
2004D
2104C
MEM
INT
5G
BB
2004C
2104B
MEM
INT
4G
BB
2004B
2104A
MEM
INT
3G
BB
2004A
MEM
INT
APP
INT
RF
INT
W-HW
INT
PM
INT
2112
2114
2116
2118
2120

FIG. 21

2180
1801/
1802
NAS
RRC
PDCP
RLC
MAC
PHY
UE
2186
2185
2184
2183
2182
2181
1811/
1812
RRC
PDCP
RLC
MAC
PHY
S1-AP
SCTP
IP
L2
L1
RAN NODE
2215
2214
2213
2212
2211
1821
NAS
S1-AP
SCTP
IP
L2
L1
MME

FIG. 22

2300
UE
IP
PDCP
RLC
MAC
PHY
1801/
1802
2313
2184
2183
2182
2181
RAN NODE
1811/
1812
GTP-U
UDP/IP
L2
L1
2304
2303
2212
2211
S-GW
1822
P-GW
1823

FIG. 23

EPC 1818
SLICE 2401
SUB-SLICE 2402
1823
1826
P-GW
PCRF
HSS
MME
S-GW
1824
1821
1822

FIG. 24

HARDWARE RESOURCES
2500
PROCESSORS
2510
2512
PROCESSOR
PROCESSOR
2514
INSTRUCTIONS
INSTRUCTIONS
2550
2550
2502
HYPERVISOR
2540
MEMORY/STORAGE DEVICES
INSTRUCTIONS
2520
2550
COMMUNICATION RESOURCES
2530
2504
PERIPHERAL DEVICES
2550
INSTRUCTIONS
NETWORK
2508
2506
DATABASES
INSTRUCTIONS
2550

FIG. 25

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- NR transmission bandwidth configuration for MPR evaluation. **QUALCOMM INCORPORATED.** 3GPP DRAFT; R4-1708606, 3RD GENERATION PARTNERSHIP PROJECT (3GPP). MOBILE COMPETENCE CENTRE, 20 August 2017, vol. RAN WG4
- Discussion on PRB grid and PRB indexing. **PANASONIC.** 3GPP DRAFT; RI-1710943, 3RD GENERATION PARTNERSHIP PROJECT (3GPP). MOBILE COMPETENCE ENTRE, 26 June 2017, vol. RAN WG1
- Way forward on spectrum utilization. *3GPP TSG-RAN WG4 #84,* 21 August 2017
- *Way forward on spectrum utilization,* 25 August 2017
- WF on NR spectrum utilization. *3GPP document R4-1711736,* 09 October 2017